# EUROPEAN PATENT APPLICATION

(11) **EP 2 541 321 A1**
(43) Date of publication of application: **02.01.2013**
(21) Application number: 11747520.2
(22) Date of filing: 25.02.2011
(51) Int. Cl.: G03B 21/00, G03B 21/14, G03B 21/56, H04N 5/74

(54) **VIDEO-IMAGE DISPLAYING SCREEN, VIDEO-IMAGE DISPLAYING SYSTEM, AND METHOD FOR DETECTING SECRET-FILMING CAMERA**

(30) Priority: 18.10.2010 JP 2010233834; 25.02.2010 JP 2010040804
(71) Applicant: Sharp Kabushiki Kaisha, Osaka-shi, Osaka 545-8522 (JP); Research Organization Of Information And Systems, Tachikawa-shi, Tokyo 190-8562 (JP)
(72) Inventor: GOHSHI Seiichi, Osaka 545-8522 (JP); ECHIZEN Isao, Tokyo 101-8430 (JP)
(74) Representative: Goddar, Heinz J.
(86) International application number: PCT/JP2011/054346
(87) International publication number: WO 2011/105564

(57) **Abstract**

Provided is a technique for easily detecting a person who attempts illegal camcording, by using means that removes non-visible light as an anti-camcording interference image from a video image containing the non-visible light. A video image display system (1) includes: a screen (203) that displays a video image; an infrared ray emitting unit (204) that projects infrared rays together with the video image toward an observer and an infrared ray camera (205) that detects infrared rays reflected by a video camera owned by the observer. The infrared ray camera (205) particularly detects reflection light from an infrared ray cut filter attached to the video camera of the observer.

## Description

### Technical Field

The present invention relates to a technology for preventing an action of illegally camcording an image content displayed on a screen or an image display panel, such as a movie, with an image recording device such as a video camera.

### Background Art

Recently, digital image display devices and image pickup devices such as digital cameras have been spread, and has provided further higher image quality, which has made it possible to watch contents having high image quality at low costs. On the other hand, however, actions of picking up contents such as images and moving images displayed on screens or displays with image pickup devices such as digital video cameras and illegally distributing the contents thus obtained (illegally camcording actions) have been seen as problematic. The distribution of such pirated DVDs thus illegally obtained is against the protection of copy rights, and causes significant economic losses, and hence, countermeasures against the same have been urgently needed.

As a countermeasure against this problem, the following method has been proposed: in an image content before display (original image content), a facility ID (information about a facility where the image content is screened), a device ID (information about a device used for the screening of the image content), etc. are embedded by electronic watermarking, and in the case where an illegally camcorded image content is distributed improperly, the facility, the device, etc., where the illegal camcording was performed, are identified by detecting the ID from the content.

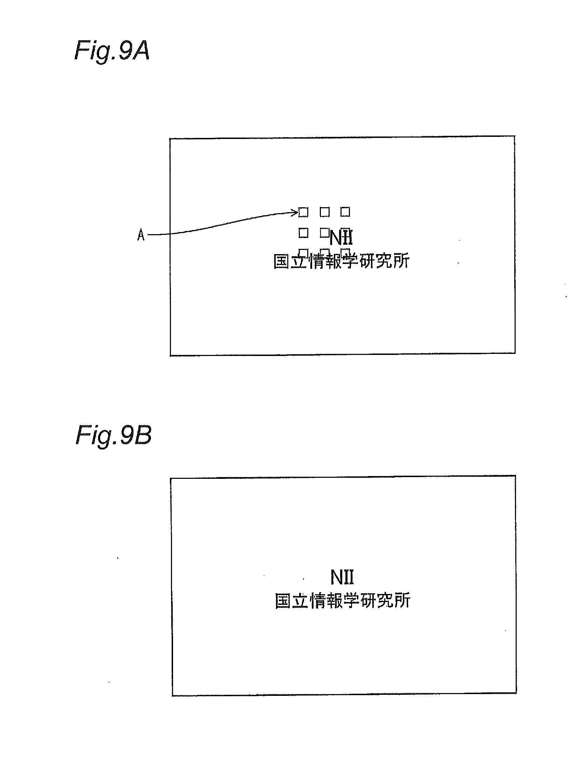

Further, as an attempt for preventing the illegal camcording action by different means than the above-described method, a method of projecting infrared rays from a screen toward an auditorium together with video image display has been proposed (see, for example, JP2008-176195A, and JP2002-341449A). This method utilizes the difference between the visibility characteristics of humans and the image pickup characteristics of cameras, i.e., that the eyes of humans do not visually recognize infrared rays, but content recording devices equipped with CCD or CMOS image sensors, etc. (specifically, for example, video cameras) detect infrared rays in the same manner as that for visible light. With this technique, while observers who watch video images visually recognize only video image display, infrared rays are recorded by illegally camcording cameras as an image that interferes with video images. FIG. 9A shows an exemplary image that is, when infrared rays are projected from a screen toward an auditorium together with video image display, obtained by camcording the video image with use of a camera. As shown in FIG. 9A, the image camcorded by the camera contains an image of infrared rays as a white interference image A.

Thus, by the above-described method, an illegally camcorded video image can be degraded, thereby being made useless. Therefore, the above-describe method is considered to be an effective method as a means for preventing the illegal camcording in a movie theater or the like.

By the above-described illegal camcording interference method utilizing infrared rays, however, a problem that if a filter that does not transmit light having infrared wavelengths such as an infrared ray cut filter is provided over a camera, the effect of interfering with video images is decreased significantly. In the case where a display video image containing infrared rays is camcorded with a camera that uses a filter as described above, the obtained video image include substantially no video image originating from the infrared rays, and the illegally camcorded image cannot be made useless. FIG. 9B shows an exemplary image obtained by camcording a video image containing images of infrared rays as interference images with use of a camera provided with an infrared ray cut filter. As shown in this drawing, the interference image of infrared rays is removed by the effect of the infrared ray cut filter, and the camcorded image is still valuable as a content.

### Disclosure of the Invention

The present invention was made in light of the above-described problem, and it is an object of the present invention to provide a technique for easily detecting a person who attempts to illegally camcord a video image containing non-visible light by using a filter that cuts off the non-visible light.

In order to solve the above-described problem, a video image display screen disclosed below includes a video image display section that displays a video image; a non-visible light emission part that projects light other than visible light, together with the video image, toward an observer; and a non-visible light detection section that detects the light other than visible light reflected by a camcorder owned by the observer.

Here, the light other than visible light refers to light having wavelengths that do not fall in a visible light wavelength band from 380 nm to 780 mn, and more specifically, it refers to infrared rays or ultraviolet rays. Such light other than visible light is not perceived by eyes of humans, but is detected in the same manner as visible light by a camcorder equipped with CCD or CMOS image sensors, or the like (more specifically, for example, a video camera).

With the above-described configuration, during a period while a video image is being displayed on the video image display section, light other than visible light, which is not perceived by eyes of humans but recorded as a visible image by a camcorder such as a video camera, can be projected toward an observer, together with video images. Thus, in the case where an observer has a video camera used in illegal camcording, light other than visible light is added as an image interfering with the original video image (anti-camcording signals) in the camcorded image content, thereby degrading display quality of the illegally camcorded image. It should be noted that since light projected from the light emission part is not visible light, it is seen to or humans as if only original video images would be displayed on the video image display section.

The present invention makes it possible to, without degradation of display quality of the video images, degrade display quality of illegally camcorded video images camcorded by a camcorder owned by an observer. Further, in the case where a means for cutting off non-visible light projected from the video image display screen is attached to a camcorder and illegal camcording is attempted with the camcorder, non-visible light reflected from the camcorder can be detected easily. Therefore, an effect of suppressing an action of illegal camcording can be achieved.

### Brief Description of Drawings

[FIG. 1] FIG. 1 is a block diagram showing a functional configuration of a video image display system for anti-camcording according to one embodiment of the present invention.
[FIG. 2] FIG. 2 schematically shows a schematic configuration of a video image display system for anti-camcording according to one embodiment of the present invention.
[FIG. 3] FIG. 3 is a schematic view for explaining a method for giving an interference image to an illegally camcording camera, and a method for detecting the illegally camcording camera, in the system shown in FIG. 1.
[FIG. 4] FIG. 4 is a block diagram showing a functional configuration of an image processing part provided in an infrared ray detection section in the video image display system for anti-camcording according to one embodiment of the present invention.
[FIG. 5A] FIG. 5A shows and compares an image before processing and an image after processing in the case where binarization is performed with a gray level value 80.
[FIG. 5B] FIG. 5B shows and compares an image before processing and an image after processing in the case where binarization is performed with a gray level value 250.
[FIG. 6] FIG. 6 is a schematic view for explaining a relationship between a distance L from a screen to an auditorium and a threshold value T of an area used for determination of presence/absence of a camera at a camera determination portion.
[FIG. 7] FIG. 7 schematically shows another exemplary configuration of an anti-camcording video image display system of the present invention.
[FIG. 8] FIG. 8 schematically shows still another exemplary configuration of an anti-camcording video image display system of the present invention.
[FIG. 9A] FIG. 9A schematically shows an exemplary image that is obtained by camcording a video image with a camera in the case where infrared rays are projected from a screen to an auditorium together with video image display.
[FIG. 9B] FIG. 9B schematically shows an exemplary image that is obtained in the case where a video image containing images of infrared rays as interference images is captured by a camera provided with an infrared ray cut filter.
[FIG. 10] FIG. 10 schematically shows a positional relationship among a light source A, a camera B, and a reflective object C in on method for estimating a position of an illegally camcording camera.
[FIG. 11] FIG. 11 is a block diagram showing a flow of processing performed in one method for estimating a position of an illegally camcording camera.
[FIG. 12] FIG. 12 is a block diagram showing a functional configuration of an image processing part provided in an infrared ray detection section in an anti-camcording video image display system in the case where another method for estimating a position of an illegally camcording camera is carried out.
[FIG. 13] FIG. 13 is a schematic view for explaining a first method for estimating a position of an illegally camcording camera carried out in the image processing part shown in FIG. 12.
[FIG. 14] FIG. 14 is a schematic view for explaining the first method for estimating a position of an illegally camcording camera carried out in the image processing part shown in FIG. 12.
[FIG. 15] FIG. 15 is a schematic view for explaining a second method for estimating a position of an illegally camcording camera carried out in the image processing part shown in FIG. 12.
[FIG. 16] FIG. 16 is a schematic view for explaining the second method for estimating a position of an illegally camcording camera carried out in the image processing part shown in FIG. 12.
[FIG. 17] FIG. 17 is a schematic view for explaining a third method for estimating a position of an illegally camcording camera carried out in the image processing part shown in FIG. 12.
[FIG. 18] FIG. 18 is a schematic view for explaining the third method for estimating a position of an illegally camcording camera carried out in the image processing part shown in FIG. 12.
[FIG. 19A] FIG. 19A schematically shows a first exemplary modification of the method shown in FIG. 18.
[FIG. 19B] FIG. 19B schematically shows the first exemplary modification of the method shown in FIG. 18.
[FIG. 20A] FIG. 20A schematically shows a second exemplary modification of the method shown in FIG. 18.
[FIG. 20B] FIG. 20B schematically shows the second exemplary modification of the method shown in FIG. 18.
[FIG. 21] FIG. 21 is a flowchart showing a flow of image processing performed in the image processing part shown in FIG. 4.
[FIG. 22A] FIG. 22A schematically shows a case where a specular object is not detected in a part of a plurality of successive image frames.
[FIG. 22B] FIG. 22B schematically shows a case where the position of the specular object subtly deviates with time in a plurality of successive image frames.
[FIG. 22C] FIG. 22C schematically shows a case where the specular object is detected as an aggregation of different small regions in a plurality of successive image frames.
[FIG. 23] FIG. 23 is a back view showing a schematic configuration of a screen in a video image display system according to Embodiment 3.
[FIG. 24] FIG. 24 is a block diagram showing a configuration of an image processing part in a video image display system according to Embodiment 3.
[FIG. 25] FIG. 25 is a flowchart showing a flow of image processing performed in an image processing part in a video image display system according to Embodiment 3.

### Embodiments for Carrying Out the Invention

In order to solve the above-described problem, a video image display screen according to one embodiment of the present invention includes: a video image display section that displays a video image; a non-visible light emission part that projects light other than visible light, together with the video image, toward an observer; and a non-visible light detection section that detects the light other than visible light reflected by a camcorder owned by the observer.

Further, the video image display screen described above preferably includes a non-visible light detection section that detects the light other than visible light reflected by a camcorder owned by an observer who watches the video image display screen in a theater or the like.

In this way, in the case where illegal camcording is attempted in a theater provided with the video image display screen from which video images and non-visible light for interfering with the video images are projected toward an observer, it can be supposed that an illegally camcording person attaches a non-visible light cut filter (infrared ray cut filter) such as an infrared ray reflection filter or an infrared ray absorption filter on a front of a camera, so as to cut off non-visible light (anti-camcording signals) that interferes with video images. The non-visible light cut filter reflects most of non-visible light. Therefore, reflection light from a camcorder used in illegal camcording is detected at a relatively high intensity by the non-visible light detection section. Therefore, with the provision of the non-visible light detection section, the presence of a camcorder can be confirmed easily. The light source for reflection light of the non-visible light may be an auxiliary light source other than the light source for anti-camcording signals.

Thus, the video image display screen of the present embodiment makes it possible to, without degradation of display quality of the video images displayed on the video image display section, degrade display quality of illegally camcorded video images camcorded by a camcorder owned by an observer. Further, in the case where an observer attempts illegal camcording while removing non-visible light emitted from the video image display screen, non-visible light reflected from the camcorder of the observer can be detected easily with the non-visible light detection section. Therefore, the effect of preventing an action of illegal camcording can be improved further.

In the video image display screen of the present embodiment, the light other than visible light may be infrared rays, and the non-visible light detection section may be an infrared ray detection section that detects infrared rays.

In the case where the light other than visible light is infrared rays, it does not harm human bodies, it cannot be recognized visually by humans, and a camcorder such as a video camera is caused to sense the light as an image that interferes with video images. Further, for example, an infrared ray camera, a photodiode, or the like may be used as the infrared ray detection section, so that reflection light from a camcorder such as a video camera can be detected easily.

In the video image display screen of the present embodiment, the infrared ray detection section may be an infrared ray camera.

With the above-described configuration, in which the infrared ray detection section is an infrared ray camera, an image according to an intensity of infrared rays detected can be obtained. It should be noted that the infrared camera referred to herein is a camera that can detect at least light in an infrared light region. In other words, infrared ray cameras are not limited to those capable of detecting only light in the infrared light region, but it may be one that can detect light in the infrared light region plus light in the visible light region and form image data.

In the video image display screen of the present embodiment, the infrared ray detection section may detect reflection light from a member that blocks infrared rays.

Here, the member that blocks infrared rays refers to a member having a function of preventing transmission of infrared rays. The member that blocks infrared rays, provided on a front face of the camcorder (camera used in illegal camcording) owned by the observer, can remove infrared rays from video images on the video image display screen that performs video image display containing infrared rays, and can camcord only the video images.

Specific examples of such a member that blocks infrared rays include an infrared ray reflection filter, an infrared ray absorption filter, and the like. In the case where such a filter is provided on a front face of a camera used in illegal camcording, it reflects much of infrared rays. This allows the infrared ray detection section to determine that reflection light is present in the were it receives infrared rays having an intensity at or greater than a threshold. Thus, it is possible to selectively detect reflection light from the member that blocks infrared rays.

In the video image display screen of the present invention, the non-visible light emission part may project light, while changing a region irradiated with the light, and the non-visible light detection section may receive reflection light from a position at which the non-visible light emission part emits light.

With the above-described configuration, the light projected from the non-visible light emission part is caused to have directivity. Here, as a method for changing a region irradiated with light, the following methods are applicable, for example: a method of moving the non-visible light emission part like a search light; and a method in which a zoom lens having a variable focal distance is provided, and the distance between a non-visible light source and the lens is changed.

With the above-described configuration, the non-visible light detection section can receive reflection light originating from light projected by the non-visible light emission part, corresponding to the region irradiated by the non-visible light emission part that varies with time. More specifically, the light receiving face of the non-visible light detection section can be moved so as to be synchronized with the directivity of the non-visible light emission part. Here, that the light receiving face and the non-visible light emission section move in synchronization with each other means that the light receiving face and the light emitting face of the non-visible light emission part move concurrently so as to be directed in the same direction.

Further, as another method of allowing the non-visible light detection section to receive reflection light originating from light from a position at which the non-visible light emission part projects light, the following method is available: by providing a plurality of non-visible light detection sections, or providing a wide-angle lens on the light receiving face, non-visible light reflected from all observers in an auditorium can be received at once.

With the above-described configuration, even with a decrease in the number of the non-visible light emission parts, the auditorium can be irradiated from corner to corner, and non-visible light reflected from all observers in the auditorium can be detected without failure.

In the video image display screen of the present embodiment, the non-visible light detection section may have such a light receiving range that it can receive reflection light from all observers.

With the above-described configuration, reflection light from an entire auditorium can be detected with one non-visible light detection section. An exemplary configuration that realizes this is, for example, an infrared ray camera equipped with a wide-angle lens, a super-wide-angle lens, or a fish-eye lens. Here, the wide-angle lens refers to a lens having a focal distance shorter than 35 mm, and a field angle of 63° or more. The super-wide-angle lens refers to a lens having a further shorter focal distance than that of the wide-angle lens, and a field angle of 84° or more. The fish-eye lens refers to a lens that can achieve a field angle of 180° or more.

In the video image display screen of the present embodiment, a plurality of the non-visible light detection sections may be provided.

With the above-described configuration, in which a plurality of non-visible light detection sections are provided, the non-visible light detection sections can take charge of respective detection regions.

In the video image display screen of the present embodiment, the non-visible light emission part may be repeatedly turned on/off during a period while a video image is being displayed on the video image display section.

With the above-described configuration, light other than visible light, while blinking, is emitted from the video image display section. This causes the light from the non-visible light emission part to go, while blinking, into images camcorded by a camcorder such as a video camera. If light different from the original video images is displayed in a blinking state in this way, it is more conspicuously perceived by visual sense of humans. Therefore, the above-described configuration makes it possible to degrade display quality of camcorded more significantly.

The video image display screen of the present embodiment further includes an image processing part that processes image data obtained by the infrared ray camera, wherein the image processing part may include a binarization portion that performs binarization with respect to each pixel of the image data according to a threshold value of an infrared ray intensity.

With the above-described configuration, reflection light from a camcorder used in illegal camcording, and reflection light from the other objects, can be distinguished from each other more surely.

In the video image display screen of the present embodiment, the image processing part may further include a frame cut portion that removes a frame in which all pixels of the image data have an infrared ray intensity of 0.

With the above-described configuration, in the case where the non-visible light emission part is blinking, unnecessary image data obtained by the infrared ray camera while light is turned off can be removed.

In the video image display screen of the present embodiment, the image processing part may further include: an area measurement portion that measures an area of a region where pixels each of which has a value equal to or greater than the threshold value as a result of binarization by the binarization portion are present; and a determination portion that determines whether or not the area of the region where the said pixels are present, measured by the area measurement portion, is equal to or greater than a predetermined area (threshold), and in the case where the said area is equal to or greater than the predetermined area, determines that the camcorder is present.

The determination portion preferably performs the determination by using a plurality of temporally successive frames.

For example, the determination portion may determine that the camcorder is present, in the case where, among the plurality of temporally successive frames, the number of frames in each of which a region where pixels each of which has a value equal to or greater than the threshold value as a result of binarization by the binarization portion are present is determined to have an area equal to or greater than a predetermined area by the area measurement portion is greater than the number of frames in each of which such a region is determined to have an area smaller than the predetermined area.

Alternatively; the determination portion may determine that the camcorder is present, in the case where a moving distance of a region is a predetermined distance or less over a plurality of temporally successive frames, the region being a region where pixels each of which has a value equal to or greater than the threshold value as a result of binarization by the binarization portion are present and that is determined to have an area equal to or greater than the predetermined area by the area measurement.

Still alternatively, the determination portion may determine that the camcorder is present, in the case where a distance between small regions is a predetermined distance or less over a plurality of temporally successive frames, the small region being a small region where pixels each of which has a value equal to or greater than the threshold value as a result of binarization by the binarization portion are present.

With the above-described configuration in which the area measurement portion and the determination portion are provided, the presence/absence of a camcorder used in illegal camcording can be determined more surely.

In the video image display screen of the present embodiment, the image processing part further includes a difference processing portion that calculates an infrared ray intensity difference between image data obtained by the infrared ray camera, and reference image data preliminarily stored, wherein the reference image data may be image data obtained by the infrared ray camera in a state in which the observer is not present.

The above-described configuration makes it possible to easily remove reflection light from equipment in a theater irrelevant to a camcorder used in illegal camcording. Therefore, erroneous detection by the infrared ray detection section can be decreased.

In the video image display screen of the present embodiment, the image processing part may further include: a labeling portion that extracts data of a region that incorporates a region where pixels each of which has a value equal to or greater than the threshold value as a result of binarization by the binarization portion are present; and a determination portion that determines presence/absence of a camcorder by performing template matching with respect to the data extracted by the labeling portion.

With this configuration, in which the labeling portion and the determination portion are provided, the presence/absence of a camcorder used in illegal camcording can be determined more surely.

The video image display screen of the present embodiment may further include an image processing part that processes image data obtained by the infrared ray camera, wherein the image processing part may include a position estimation portion that estimates a position of the camcorder.

With the above-described configuration, it is possible not only to confirm the presence of a camcorder attempting illegal camcording, but also to specify the position of the camcorder. Therefore, an illegally camcording person can be found out easily in a facility.

In the video image display screen of the present embodiment, the position estimation portion may estimate a relative position of the camcorder in a facility in which the video image display screen is provided, based on preliminarily prepared position information about inside of the facility.

The above-described configuration makes it possible to easily and accurately estimate the position of the camcorder.

The position information about inside of the facility is, for example, data of infrared ray reflection images obtained by placing reflective markers at predetermined positions in a facility and picking up images of this facility with an infrared ray camera; or a correspondence table between seats and coordinates of pixels, prepared by analyzing which seat in the facility corresponds to which pixel of coordinates in image data obtained by picking up images with a camera (not limited to an infrared ray camera).

To solve the above-described problem, a video image display system according one embodiment of the present invention includes: the video image display screen according to any one of the above-described configurations; and an image formation section that generates a display image based on digital video image signals, and projects the display image onto the video image display screen.

The video image display system of the present embodiment makes it possible to, without degradation of display quality of the video images displayed on the video image display section, degrade display quality of illegally camcorded video images camcorded by a camcorder owned by an observer. Further, in the case where an observer attempts illegal camcording while removing non-visible light emitted from the video image display screen, non-visible light reflected from the camcorder of the observer can be detected easily with the non-visible light detection section. Therefore, the effect of preventing an action of illegal camcording can be improved further.

In order to solve the above-described problem, a camcorder detection method according to one embodiment of the present invention is a method for detecting a camcorder for camcording a video image displayed on a video image display screen, and the method includes the steps of projecting light other than visible light, together with the video image displayed on the video image display screen, toward an observer; and detecting presence/absence of a camcorder by detecting an intensity of the light other than visible light reflected by the camcorder owned by the observer.

In the case where illegal camcording is attempted in a theater provided with the video image display screen from which video images and non-visible light for interfering with the video images are projected toward an observer, as is the case with the above-described video image display screen, it can be supposed that an illegally camcording person attaches a non-visible light cut filter (infrared ray cut filter) such as an infrared ray reflection filter or an infrared ray absorption filter on a front face of a camera, so as to cut off non-visible light (anti-camcording signals) that interferes with video images. The non-visible light cut filter reflects most of non-visible light. Therefore, reflection light from a camcorder used in illegal camcording is detected at a relatively high intensity, as compared with equipment or the like in the theater. Therefore, by detecting the intensity of light other than visible light as described above, the non-visible light detection section, the presence of a camcorder can be confirmed easily.

In this way, with the method of the present embodiment, in the case where an observer attempts illegal camcording while removing non-visible light emitted from the video image display screen, non-visible light reflected from the camcorder of the observer can be detected. Therefore, the effect of suppressing an action of illegal camcording can be achieved.

In the detection method for detecting a camcorder according to the present embodiment, in the step of detecting presence/absence of a camcorder, it may be determined that a camcorder is present, in the case where the intensity of the light other than visible light is equal to or greater than a threshold value.

A video image display system according one embodiment of the present invention includes a video image display section that displays a video image, and a non-visible light emission part that projects light other than visible light, together with the video image, toward an observer, wherein the non-visible light emission part projects light, while changing a region irradiated with the light.

Here, the light other than visible light refers to light having wavelengths that do not fall in a visible light wavelength band from 380 nm to 780 nm, and more specifically; it refers to infrared rays or ultraviolet rays. Such light other than visible light is not perceived by eyes of humans, but is detected in the same manner as visible light by a camcorder equipped with CCD or CMOS image sensors or the like (more specifically, for example, a video camera).

With the above-described configuration, during a period while a video image is being displayed on the video image display section, light other than visible light, which is not perceived by or humans but recorded as a visible image by a camcorder such as a video camera, can be projected toward an observer, together with video images. Thus, in the case where an observer has a video camera used in illegal camcording, light other than visible light is added as an image interfering with the original video image (anti-camcording signals) in the camcorded image content, thereby degrading display quality of the illegally camcorded image. It should be noted that since light projected from the light emission part is not visible light, it is seen to eyes of humans as if only original video images would be displayed on the video image display section.

With the above-described configuration, the light projected from the non-visible light emission part is caused to have directivity. Here, as a method for changing a region irradiated with light, the following methods are applicable: a method of moving the non-visible light emission part like a search light; and a method in which a zoom lens having a variable focal distance is provided, and the distance between a non-visible light source and the lens is changed.

With the above-described configuration, even with a decrease in the number of the non-visible light emission parts, the auditorium can be irradiated from corner to corner.

The following description explains more specific embodiments of the present invention, while referring to the drawings.

Whereas light other than visible light, such as infrared rays and ultraviolet rays, is not perceived by visual sense of humans, wavelengths out of the visible light region such as infrared rays, ultraviolet rays, etc. are also detected as noises by CCD and CMOS image sensors as image pickup elements of digital cameras and digital video cameras used in illegal camcording, due to instability, etc. of elements themselves. The inventors of the present invention focused attention on this point, and found that when video images are being displayed on a screen in a movie theater or the like, light having a waveform difficult for humans to recognize could be emitted as anti-camcording signals at the same time, from the image display surface, so that the above-mentioned anti-cameording signals can be caused to be captured as perceivable signals in an image content illegally camcorded by a video camera or the like. In the case where an image content captured by a video camera is reproduced, an image based on anti-camcording signals is recognized visually as a noise that interferes with an original video image, whereby quality of the illegally camcorded image content can be degraded.

If a band-pass filter such as an infrared ray cut filter is provided in front of a lens of a video camera, however, only light having specific wavelengths (e.g., visible light) can be selectively transmitted, whereas the other light (light other than visible light, for example, infrared rays, ultraviolet rays, etc.) can be cut off. Such a band-pass filter is commercially available, and can be got easily.

Therefore, in the case where video image display containing the above-described anti-camcording signals is camcorded with a video camera in a state in which an infrared ray cut filter or the like is attached thereto, the following problem occurs: the anti-camcording signals are blocked from the camera, and a video image that does not contain the anti-camcording signals and hence is not degraded as to its quality is obtained by the camera.

The inventors of the present invention made studies in order to solve this problem, and confirmed that a filter as described above that selectively transmits visible light and cuts off light other than visible light reflects much of light other than visible light, as compared with a material having a high reflectance such as a metal. Then, based on this finding, the inventors found that in a theater where video images containing anti-camcording signals can be displayed, a camera that detects light other than visible light is provided, so as to easily detect a video camera to which a visible light cut filter is attached. Thus, the inventors completed the present invention.

One embodiment of the present invention, realized based on the above-described technical idea, is explained as follows, with reference to the drawings. It should be noted that specific examples explained herein are merely examples of the present invention, and the present invention is not limited to these.

### Embodiment 1

A video image display system for screening video images such as a movie in a movie theater or a play theater, based on a digital image content, is explained as the present embodiment. In the case where a digital image content such as a movie screened in a theater is camcorded with a digital video camera or the like, the video image display system of the present embodiment is capable of degrading display quality of the camcorded digital image content to an unwatchable level, thereby preventing unauthorized distribution of the illegally camcorded image content.

Further, the video image display system of the present embodiment is provided with an infrared ray camera for detecting infrared rays reflected by a digital video camera equipped with an infrared cut filter or the like, and therefore, is capable of detecting the presence of a camera that attempts illegal camcording while avoiding degradation of image quality due to infrared rays.

In other words, the video image display system according to the present embodiment is an anti-camcording video image display system (illegal camcording detection system) having a function for preventing illegal camcording and detecting an illegal camcording person.

### Schematic configuration of video image display system

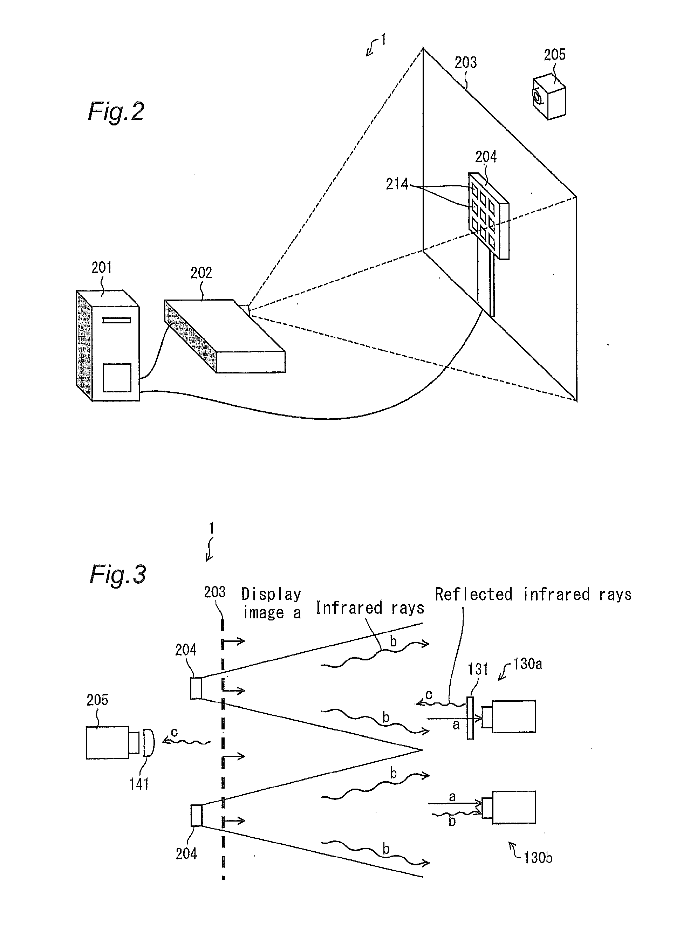

FIG. 2 shows a schematic configurations of a video image display system 1 according to the present embodiment. The video image display system 1 (video image display device) includes a video image reproducer 201, a projector 202 (image formation section), a screen 203 (video image display section), an infrared ray emitting unit 204 (non-visible light emission part, light emission control part), and an infrared ray camera (non-visible light detection section, infrared ray detection section) 205. In the present embodiment, the screen 203, the infrared ray emitting unit 204, and the infrared ray camera 205 forms a video image display screen.

The video image reproducer 201 temporarily stores an image content captured from outside, subjects the same to decoding for enabling image formation, and transmits digital video image signals obtained after the processing to the projector 202. As the configuration of the video image reproducer 201, a conventionally known configuration of a digital video image reproducing device can be applied. It should be noted that in the video image display system 1 as in the present embodiment, an image content to be reproduced by the video image reproducer 201 is usually an image content composed of a plurality of image frames (moving image content), but the image content is not limited to that in the present invention. In other words, the image content may be a still image content.

The projector 202 forms display images with display elements incorporated therein, based on the digital video image signals transmitted from the video image reproducer 201. The images thus formed are projected onto the screen 203 with use of a projection optical system incorporated therein. As the configuration of the projector 202, a conventionally known configuration of a front-projection-type image display device can be applied.

The screen 203 displays images projected by the projector 202.

The infrared ray emitting unit 204 is provided on a back face side of the screen 203, and emits infrared light toward a front face side during a period while video images are being displayed on the screen 203. Here, the back face side of the screen 203 is a side opposite to a face on which images are displayed (a face that faces an observer or an auditorium), and the front face side of the screen 203 is a side on which images are displayed (side on which an observer is present).

The infrared ray camera 205 mainly detects light in an infrared light region of wavelengths of 780 nm or more, and forms an image. The infrared ray camera 205 is provided so as to detect infrared rays reflected by an infrared ray cut filter or the like attached to a video camera used in illegal camcording, among infrared light emitted from the above-described infrared ray emitting unit 204.

It should be noted that the infrared ray camera 205 is not limited to those capable of detecting only light in the infrared light region, but it may be one that can detect light in the infrared light region plus light in the visible light region and form image data, like a night shot function of a video camera. In other words, the infrared ray camera 205 herein refers to that capable of detecting at least light in the infrared light region.

Here, the following description explains specific configurations of the screen 203 and the infrared ray emitting unit 204.

The screen 203 has a configuration identical to that of a conventional usual screen that displays video images in a movie theater. It should be noted that a conventional usual screen is a shroud having a multiplicity of acoustic pores (pores having a diameter of about 1 mm), and having a white paint applied over a surface thereof, whereby an image display surface 203a is formed.

The infrared ray emitting unit 204 is arranged on the back face side of the screen 203, as described above. Further, in the present embodiment, the infrared ray emitting unit 204 is located at a position corresponding to a substantial central portion of the image display region 203a of the screen 203. As shown in FIG. 2, there are infrared light emission regions 214, in an array of three in the vertical direction and three in the horizontal direction, which means that they are nine in total, in the infrared ray emitting unit 204. In each infrared light emission region 214, an infrared LED is provided. The infrared LEDs are, for example, those which emit light in a wavelength band in the vicinities of a wavelength of 780 nm (hereinafter referred to as 780 nm LEDs), those which emit light in a wavelength band in the vicinities of a wavelength of 850 mn (hereinafter referred to as 850 nm LEDs), or the like. Infrared rays emitted from the infrared ray emitting unit 204 are preferably parallel light. This makes it possible to increase the intensity of the infrared rays.

With the above-described configuration, as shown in FIG. 3, infrared light emitted from the infrared ray emitting unit 204 passes through the pores provided in the screen 203, thereby being projected toward the observer (the auditorium).

It should be noted that light emitted from the infrared LEDs contains light in a visible light range dose to an infrared light range in some cases. Therefore, a visible light cut filter may be provided on a light emitting face of the infrared ray emitting unit 204. The visible light cut filter used herein may be a conventionally known one. Particularly in the case where the 780 nm LEDs are used, they are used desirably together with a visible light cut filter, since the 780 nm LEDs emit light in a wavelength band close to the visible light range. In this way, the infrared ray emitting unit for emitting infrared rays that are detected by a content recording device such as a video camera but are not recognized by eyes of people in the auditorium can be realized.

### Respective functions in video image display system 1

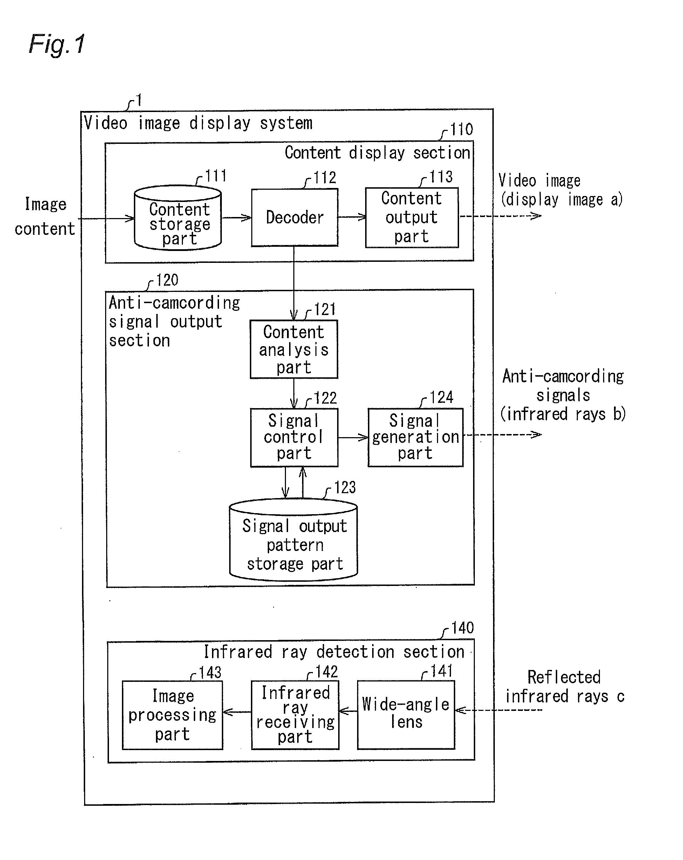

Next, the following description explains a configuration for displaying video images, a configuration of degrading quality of illegally camcorded images, and a configuration for detecting a camera used in illegal camcording, in the video image display system 1. FIG. 1 is a functional block diagram showing configurations of respective units in the video image display system 1.

As shown in FIG. 1, the video image display system 1 includes a content display section 110 for displaying video images on the screen 203, an anti-camcording signal output section 120 for degrading display quality of illegally camcorded images, and an infrared ray detection section 140 for detecting a camera used in illegal camcording.

The content display section 110 includes a content storage part 111, a decoder 112, and a content output part 113.

The content storage part 111 temporarily stores an image content such as a movie captured from outside. In this case, the content storage part 111 is realized with a hard disk drive or a large-capacity memory. It should be noted that in the present invention, the content storage part is not limited to those described above, but may be something that functions as a buffer during the reproduction and display of an image content, such as a cache or a high-speed memory. The decoder 112 decodes an image content stored in the content storage part 111 into a format compatible with a display standard of the projector 202. The content output part 113 forms display images from the image content (digital video image signals) thus decoded, and displays the same on the image display surface (image display region) 203a of the screen 203.

In the present embodiment, among the blocks of the content display section 110, the content storage part 111 and the decoder 112 are present in the video image reproducer 201. The content output part 113 is realized as the projector 202 and the screen 203.

For the content display section 110 described above, a configuration identical to that of a known video image display system can be used.

The anti-camcording signal output section 120 includes a content analysis part 121 (image analysis part), a signal control part 122 (light emission control part), a signal output pattern storage part 123 (light emission control part), and a signal generation part 124 (light emission part).

The content analysis part 121 analyzes a spatial feature amount and a temporal feature amount of an image content (digital video image signals) captured from the content display section 110. More specifically; as to each image content composed of a plurality of image frames, the content analysis part 121 analyzes brightness (gray level value) of each pixel of each frame. This makes it possible to obtain image information regarding a spatial feature amount and a temporal feature amount, that is, what level of brightness which region has at which time (which frame), in a series of video images. It should be noted that digital video image signals transmitted to the content analysis part 121 are video image signals processed by the decoder 112.

The signal control part 122 controls a light emission intensity at the infrared ray emitting unit 204, at a time when a specific image frame is displayed, based on image information obtained by the content analysis part 121. Here, the control of the light emission intensity is carried out with reference to information stored in the signal output pattern storage part 123.

It should be noted that the signal output pattern storage part 123 stores an intensity of infrared light (anti-camcordmg signal) emitted by the signal generation part 124, an ON/OFF pattern of signal generation, etc. More specifically, an average gray level value of each pixel in each image frame, and a light emission intensity of the infrared ray emitting unit 204 (electric current value of infrared LEDs) at that time are stored together with correspondence therebetween. This allows the signal control part 122 to control light emission states of the infrared LEDs in the signal generation part 124 while referring to the signal generation patterns stored in the signal output pattern storage part 123.

The signal generation part 124 turns ON/OFF of the output of infrared light as the anti-camcording signal, and varies the intensity thereof, according to instructions from the signal control part 122.

In the present embodiment, among the blocks in the anti-camcording signal output section 120, the following are present in the video image reproducer 201: the content analysis part 121, the signal control part 122, and the signal output pattern storage part 123. The signal generation part 124 is equivalent to the infrared ray emitting unit 204.

As described above, with the content analysis part 121, the signal control part 122, and the signal output pattern storage part 123 thus provided, the light emission intensity and the light emission pattern of infrared rays by the infrared ray emitting unit 204 can be controlled, according to characteristics of an image content. Further, the control can be performed in such a manner that infrared rays having different light emission intensities are projected from the light emission regions 214 of the infrared ray emitting unit 204, respectively.

It should be noted that the present invention does not necessarily require variation of the light emission intensity and the light emission pattern (cycles of turning on/off) in accordance with characteristics of image contents, and the light emission by the infrared ray emitting unit 204 may be controlled according to a predetermined light emission intensity and a predetermined light emission pattern. This makes it possible to reduce an amount of processing operations at the anti-camcording signal output section 120. In the case where the control of light emission is thus carried out in accordance with predetermined patterns, a light emission control part may be attached to the infrared ray emitting unit 204, and during a period while video images are displayed on the screen 203, infrared rays may be output at a predetermined light emission intensity and in a predetermined light emission pattern, irrespective of details of the image contents.

The video image display system 1 of the present embodiment has the above-described configuration, thereby being capable of emitting infrared light together with video images from the image display surface of the screen 203 toward an observer (see FIG. 3). Since eyes of humans do not recognize infrared light, video images containing infrared light, even if displayed on the screen, are recognized as if video images having no difference from the usual video images would be displayed. In contrast, video cameras 130 (130a, 130b) used in illegal camcording includes, as a light-receiving element, a CCD or CMOS image sensor that detects infrared light also. Therefore, if the video camera camcords video images containing infrared light, it captures also the infrared light emitted from the screen, as an image that can be recognized visually by humans.

It should be noted that the video image display system 1 of the present embodiment uses the light emission unit having infrared LEDs as light sources, as the light emission part that emits light other than visible light, but the present invention is not limited to this configuration. An infrared light source other than LEDs may be used as a light source that emits infrared light. Further, light other than visible light is not limited to infrared rays having a wavelength of 780 nm or more. Ultraviolet rays having a waveform of 380 nm or less may be used instead. It should be noted that ultraviolet rays are harmful to human bodies, and therefore, in the case where the video image display device of the present invention is used in a public facility such as a movie theater, a light emission part that emits infrared light is preferably used. In the case where light other than visible light, emitted from the light emission unit, is ultraviolet rays, an ultraviolet ray detection section is used as the non-visible light detection section, in place of the infrared ray detection section 140. An exemplary ultraviolet ray detection section is an ultraviolet ray camera, or the like. The light emission part that emits light other than visible light may be provided at a position outside the video image display section.

FIG. 3 schematically shows a method for giving an interference image to a camera used in illegal camcording, and a method for detecting a camera used in illegal camcording, in the video image display system 1. It should be noted that the infrared ray camera 205 herein is provided on a back side face of the screen 203, though in the video image display system 1 shown in FIG. 2, the infrared ray camera 205 is provided above the screen 203. Further, herein, two infrared ray emitting units are provided in an upper part and in a lower part of the screen, respectively though in the video image display system 1 shown in FIG. 2, one infrared ray emitting unit 204 is provided in a central part of the screen 203. In the present invention, these configurations are not limited particularly, and may be modified appropriately, according to a case.

In FIG. 3, cameras (camcorders) 130 (130a, 130b) used in illegal camcording by those who attempt to illegally camcord video images displayed on the screen 203 (they are also referred to as "observers" or "illegally camcording persons"). Among the two cameras 130a and 130b used in illegal camcording shown in FIG. 3, the camera 130a is a video camera to which an infrared ray cut filter (a member for cutting off non-visible light (particularly infrared rays)) 131 is attached, and the camera 130b is a usual video camera to which an infrared ray cut filter is not attached.

First, the following description explains a method for giving an interference video image to the camera used in illegal camcording.

In the video image display system 1, while a display image a is being displayed on the screen 203, infrared rays *b* are emitted as anti-camcording signals from the infrared ray emitting unit 204 at the same time. The infrared rays *b* emitted from the infrared ray emitting unit 204 are projected toward an observer (an auditorium), passing through pores provided in the screen 203.

Then, in the case where illegal camcording of an image content is carried out with use of the camera 130b, the display image a and the infrared rays *b* enter a light receiving part (lens) of the camera. Since a light receiving element of the camera 130b has light sensitivity with respect to visible light and infrared light, an image originating from the infrared rays is contained as an interference image A in the image content recorded by the camera 130b, as shown in FIG. 9A. Thus, the video image display system 1 is capable of degrading display quality of illegally camcorded images, and making the illegally camcorded images useless, and therefore, preventing the camcording by a video camera for a purpose of unauthorized distribution of video image contents.

On the other hand, in the case where an image content is illegally camcorded with use of the camera 130a to which the infrared ray cut filter 131 is attached, the display image a enters the light receiving part, passing through the infrared ray cut filter 131, but substantially none of the infrared rays *b* enters the light receiving part, since they are reflected by the infrared ray cut filter 131. Therefore, as shown in FIG. 9B, substantially no interference image is contained in the image content recorded, and the image content recorded is an image that can be visually recognized, though insufficiently.

Thus, in the case where an illegally camcording person attaches an infrared ray cut filter or the like to a video camera and camcords images by cutting off light in an infrared light region, the effect of the anti-camcording signal emitted zoom the infrared ray emitting unit 204 decreases. Then, to detect the presence of such a video camera, the infrared ray detection section 140 is provided in the video image display system 1 of the present embodiment.

### Infrared ray detection section

The following description explains a configuration of the infrared ray detection section 140.

The infrared ray detection section 140 includes a wide-angle lens 141, an infrared ray receiving part 142, an image processing part 143, and the like.

The wide-angle lens 141 is intended to allow the infrared ray receiving part 142 to receive reflection light from a wider range. Normally, the wide-angle lens 141 has an angle of view of 63° or more. With the provision of this wide-angle lens 141, the infrared ray receiving part 142 can receive reflection light from an entire auditorium in a theater.

The infrared ray receiving part 142 includes a CCD or CMOS image sensor as a light receiving element. This light receiving element has light sensitivity with respect to, not only light in the visible light region, but also light having wavelengths in the ultraviolet light region and the infrared light region. Therefore, an optical filter such as a visible light cut filter is provided on a light receiving surface of the light receiving element, and after components having wavelengths in the ultraviolet light region and the visible light region is removed by this optical filter, light is captured by the light receiving element, and an image is formed based on data that the element has obtained. It should be noted that the aforementioned filter may be a filter that transmits only light having a specific wavelength, or alternatively, a filter that removes light having a specific wavelength.

The image processing part 143 executes processing to an image captured by the infrared ray receiving part 143, so as to surely recognize a video camera used in illegal camcording. Details of the image processing executed herein will be described later.

In the present embodiment, the infrared ray detection section 140 is realized with an infrared ray camera 205. It should be noted that the image processing part 143 may be realized with a dedicated image processing device such as a PC that is a member separate from the infrared ray camera 205.

The video image display system 1 of the present embodiment, having the infrared ray detection section 140 as described above, is capable of detecting reflected light (reflected infrared rays *c*) that is obtained by reflection of infrared rays *b* projected from the infrared ray emitting unit 204, the infrared rays *b* being reflected by the infrared ray cut filter 131 in the case where the infrared ray cut filter 131 such as a low pass filter is attached to the camera 130a so as to remove an interference image formed by infrared rays, as shown in FIG. 3.

It should be noted that examples of the infrared ray cut filter 131 that can be detected by the infrared ray detection section 140 include an infrared ray reflection filter, infrared ray absorption filter, and the like. These filters have high reflectances with respect to infrared rays, and therefore, in the case where such a filter is attached to the camera 130 used in illegal camcording, the presence of the camera 130 can be detected easily by the infrared ray detection section 140.

Further, an infrared ray reflection filter has a higher reflectance with respect to infrared rays, as compared with an infrared ray absorption filter, but since a reflectance at the same level as that of glass can be obtained as well in the case where an infrared ray absorption filter is used, such an infrared ray absorption filter can be detected by the infrared ray detection section 140.

It should be noted that a curved-surface lens such as a lens of a video camera generally has an infrared ray reflectance that is lower than that of an infrared ray cut filter, but is higher than a reflectance of curved-surface glass (e.g., a drinking glass) or a reflectance of curved-surface metal (e.g., bar-like metal such as a screw driver, a frame of glasses, etc.). Therefore, according to the method of image processing at the image processing part 143, a normal video camera lens without an infrared ray cut filter can be also detected by the infrared ray detection section 140.

It should be noted that the infrared ray detection section 140 is provided on a side of a screen that is illegally camcorded, for example, on the same plane where the screen is provided, or on a backside of the screen, and its light receiving surface is preferably directed in such a direction that reflected light from the observer side can be received efficiently.

In the above-described explanation, an exemplary configuration in which infrared rays are projected toward observers (the auditorium) through acoustic holes provided in the screen 203 is described. However, the projection of infrared rays is not necessarily required to be the projection with use of acoustic holes. For example, the projection may be carried out through holes exclusively provided for the passing of infrared rays, or through holes provided for a purpose other than the acoustic purpose.

### Method of image processing carried out by image processing section

Next, the following description explains a specific example of image processing performed in the image processing part 143. This method, however, is merely an example of the present invention, and the present invention is not limited to this.

Infrared ray image data obtained by the infrared ray receiving part 142 in the infrared ray detection section 140 (the infrared ray camera 205) are input as image data composed of a plurality of frames, into the image processing part 143, frame by frame. Each set of frame image data has gray level data corresponding to a plurality of pixels arranged in rows and columns, respectively. The gray level data of each pixel are data of a gray level value (e.g., gray levels 0 to 255) corresponding to an intensity of infrared rays received by the pixel concerned. Here, in the case where received light has an infrared ray intensity of 0, the gray level 0 is obtained (this state is referred to as "black display" for conveniences sake); and in the case where received light has a maximum infrared ray intensity, the gray level 255 is obtained (this state is referred to as "white displays" for conveniences sake).

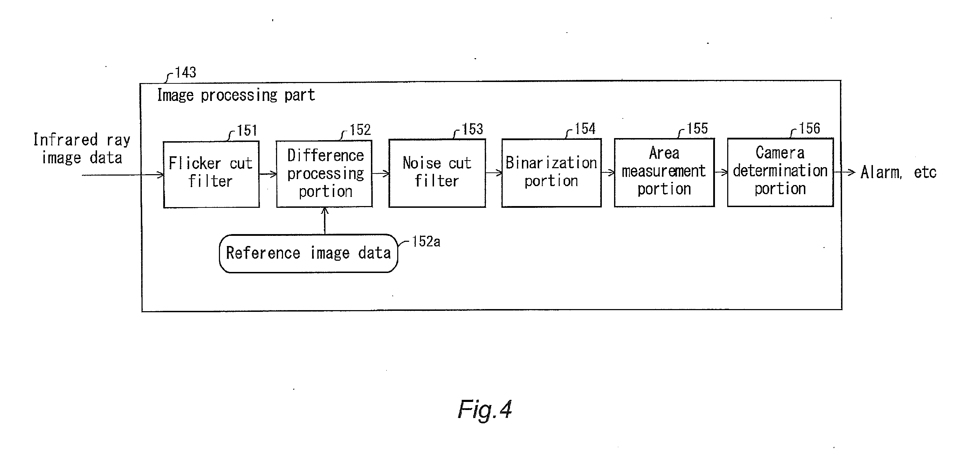

FIG. 4 shows a configuration in which the image processing part 143 is divided according to functions. As shown in FIG. 4, in the image processing part 143, there are provided a flicker cut filter 151 (frame cut portion), a difference processing portion 152, a noise cut filter 153, a binarization portion 154, an area measurement portion 155, and a camera determination portion 156 (determination portion).

The flicker cut filter 151 is a circuit that performs a processing operation of referring to each set of frame image data and determining frame image data corresponding to a state in which all the pixels are black display (gray level 0), and deleting the determined image data of black display. By performing such processing, in the case where, for example, the infrared ray emitting unit 204 is blinking or the like, the image data corresponding to the state where the infrared ray emitting unit 204 is turned off can be deleted, and only image data corresponding to the state where it is turned on can be left.

Alternatively, another method in which the flicker cut filter 151 calculates a gray level time average of each pixel in a plurality of frame image data may be used so as to delete frames in which all the pixels are black display.

The difference processing portion 152 is a circuit that compares preliminarily stored reference image data and image data transmitted thereto, and determines a difference between the two sets of data. It should be noted that reference image data 152a used herein are, for example, image data of one frame captured by the infrared ray camera 205 when the infrared ray emitting unit 204 of the video image display system 1 is caused to operate in a theater without an audience.

Further, the difference processing portion 152 removes a portion having a motion in image data, by determining a difference between a plurality of frames. Usually an illegal camcording action is carried out by fixing a camera. Therefore, specifying a still portion through this processing operation makes it possible to increase detection accuracy of the filter attached to the camera.

The noise cut filter 153 is a circuit for, in the case where white display composed of one pixel or a plurality of pixels less than a certain set number is present in a region where several pixels therearound are black display, removing the pixels of white display as noises. In this filter circuit, in the case where a certain set number (e.g., one pixel, or two pixels) or more of pixels, among a plurality of pixels around a self-pixel as the center (e.g., 3x3 pixels, or 5x5 pixels), detect infrared rays at or over a threshold value, the data of the self-pixel are caused to remain as data indicating detection of infrared rays (e.g., data of white display). In the case where the number of pixels that detect infrared rays at or over the threshold value among the plurality of pixels around the self-pixel as the center is less than the certain set number, the data of the self-pixel are regarded as data indicating non-detection of infrared rays (i.e., the gray level value 0 is output).

The binarization portion 154 is a circuit that sets a threshold value for gray level data, and performs the following processing operations: for a pixel having gray level data at or over the threshold value, converting the gray level data into data of white display (i.e., the gray level value 255); and for a pixel having gray level data less than the threshold value, converting the gray level data into data of black display (i.e., the gray level value 0).

The area measurement portion 155 is a circuit that measures the number of pixels contained in regions of white display, in the image data having subjected to binarization by the binarization portion 154. The processing operation herein is carried out by measuring a boundary between pixels of black display and pixels of white display, and counting the number of pixels that are present inside the boundary.

The camera determination portion 156 determines whether or not an area of white display determined by the area measurement portion 155 is equal to or larger than a predetermined area (equal to or more than a predetermined number of pixels). In the case where it is determined that the area is at or over a predetermined area, the camera determination portion 156 determines that a camera used in illegal camcording is present.

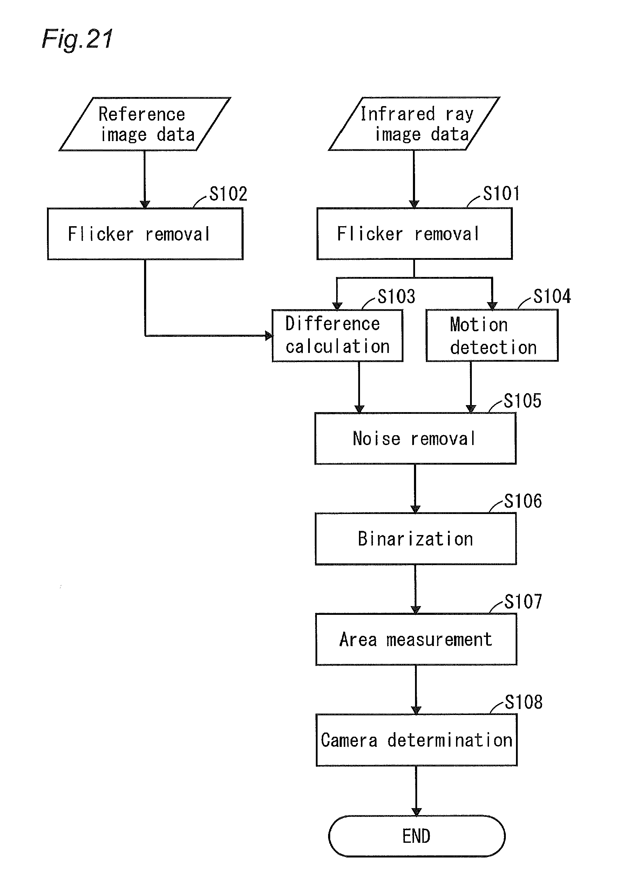

Here, the flow of image processing performed in the image processing part 143 having the above-described configuration is explained with reference to the flowchart shown in FIG. 21.

First, from the frame data (infrared ray image data) transmitted from the infrared ray receiving part 142, data of all pixel black display are cuts off by the flicker cut filter 151, and an average is determined as to a plurality of video image frames as required, whereby the image data become data composed exclusively of frame image data in which black display and white display exist (Step S101 shown in FIG. 21). It should be noted that the processing operation by the flicker cut filter 151 is not necessarily required to be carried out in the case where infrared rays emitted from the infrared ray emitting unit 204 are in an ON state at all the times. The flicker cutoff operation is carried out also with respect to the reference image data 152a, in the same manner as that in Step S101 (Step S102).

Next, the frame image data from which data of all pixel black display are deleted are subjected to difference calculation by the difference processing portion 152, regarding a difference between the foregoing frame data and the reference image data 152a (Step S103). From image data obtained by this processing operation, reflection light of infrared rays from equipment and the like preliminarily placed in a theater is removed, and consequently, image data to which infrared ray intensities of exclusively reflection light from an audience are reflected are obtained. Motion detection may be carried out with respect to image data from which flickers are removed by the operation at Step S101, so that moving reflection objects can be detected as noise components (Step S104).

Next, among pixels having high infrared ray intensities over a threshold value, as to one pixel isolated, data thereof are converted to gray level data of black display by the noise cut filter 153 Step S105). In the case where the motion detection is carried out at Step S104, noise components of moving reflection objects are removed as well herein.

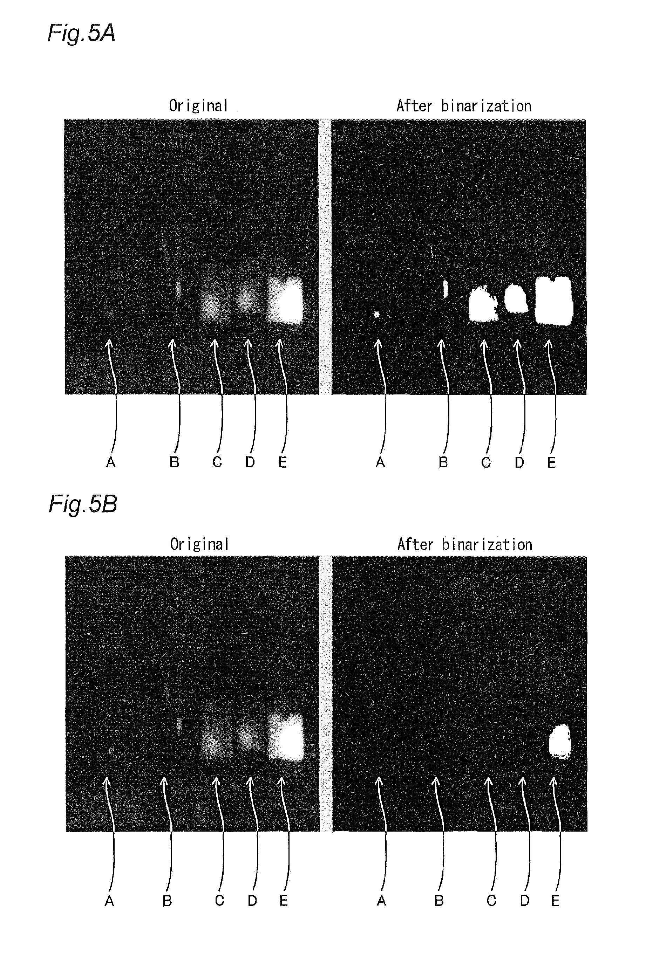

Next, the binarization portion 154 performs a processing operation of converting pixels having gray level values at or over a threshold value into the gray level value 255, and converting pixels having gray level values less than the threshold value into the gray level value 0 (Step S106). The threshold value herein may be set to, for example, the gray level 80, or the gray level 250, as shown in FIGS. 5A or 5B, respectively. In the case where weak reflection light is removed as a noise, the aforementioned threshold value is preferably set in a range of the gray level 100 to the gray level 250.

Finally, the area measurement portion 155 measures an area (number of pixels) of a region of white display in binarized image data (Step S107).

Then, the camera determination portion 156 determines whether or not the region of white display has an area equal to or larger than a predetermined area (equal to or more than the predetermined number of pixels), and in the case where it is equal to or larger than the predetermined area, the camera determination portion 156 determines that there exist a camera used in illegal camcording (Step S108). Here, it should be noted that in the case where the camera determination portion 156 determines that there exists a camera used in illegal camcording, an alarm or the like may be raised. Further, a captured image before the binarization may be displayed on a monitor in a control room or the like at the same time of the alarm, so that a monitor can easily estimate the position of the illegally camcording camera.

The method described above makes it possible to automatically detect a person who attempts to illegally camcord a movie in a movie theater or the like. In the case where the automatic detection is carried out as described above, when the presence of an infrared ray cut filter is confirmed by, for example, the above-described image processing, alarm may be raised or the like in a room where a manager (or a monitor) of the movie theater, so that he or she is informed of the presence of an illegally camcording person. This makes it possible that a manager, without confirming a camera, can easily know the presence of an illegally camcording person.

It should be noted that the above-described image processing method is merely an example, and the present invention is not limited to this. In other words, all of the processing circuits as those shown in FIG. 4 are not necessarily required to be provided in the image processing part 143. In the case where one or a plurality of the processing circuits among the processing circuits shown in FIG. 4 are provided, the detection of a camera used in illegal camcording can be also performed appropriately.

For example, with the binarization of frame image data by the binarization portion 154 alone, it is possible to distinguish a video camera to which an infrared ray cut filter 131 is attached, and equipment other than a camera, such as metal equipment, from each other, as shown in FIGS. 5A and 5B.

FIG. 5A compares original image data ("Original") and image data after binarization, in the case where binarization is carried out with the gray level value 80 as a threshold value. FIG. 5B compares original image data ("Original") and image data after binarization, in the case where binarization is carried out with the gray level value 250 as a threshold value.

The original image data shown on the left in the FIGS. 5A and 5B are data that were obtained under the following conditions: in a room in which the video image display system 1 was provided, there were placed a convex lens (magnifying glass) A, a metal (screw driver) B, an infrared transmission filter C, an infrared absorption filter D, and an infrared reflection filter E, and image pickup was carried out by the infrared ray camera 205 while the infrared ray emitting unit 204 was maintained in an ON state at all the times. In FIGS. 5A and 5B, data of reflection light from the convex lens (magnifying glass) A, the metal (screw driver) B, the infrared transmission filter C, the infrared absorption filter D, and the infrared reflection filter E are shown in the stated order from the left. It should be noted that the reflection by A and B is reflection from curved surfaces, and the reflection by C to E is reflection from flat surfaces.

FIG. 5A proves that in the case where binarization is carried out with a threshold value of the threshold value of 80, white display is obtained from all the articles A to E. However, as to the articles, the areas (numbers of pixels) of white displays are different from one another. Therefore, in the case where binarization is carried out with the threshold value of the threshold value of 80, it is preferable to carry out a processing operation of measuring areas of white display regions with the area measurement portion 155, and thereafter determining whether or not each area of white display is equal to or larger than a predetermined area (predetermined number of pixels) with the camera determination portion 156. This processing operation makes it possible to distinguish infrared ray cut filters (D and E) from the other articles such as the convex lens A and the metal B.

It should be noted that the infrared transmission filter C, which however provides only a small effect of removing infrared rays, can be distinguished as is the case with an infrared ray cut filter, if it is attached to a lens of a video camera.

Further, FIG. 5B clearly shows that in the case where binarization is carried out with a threshold value of the threshold value of 250, white display is obtained from the article E alone. Thus, it was confirmed that in the case where binarization was carried out with a threshold value of the threshold value of 250, the infrared reflection filter E having a greater infrared ray cutoff effect can be distinguished from the other articles A to D.

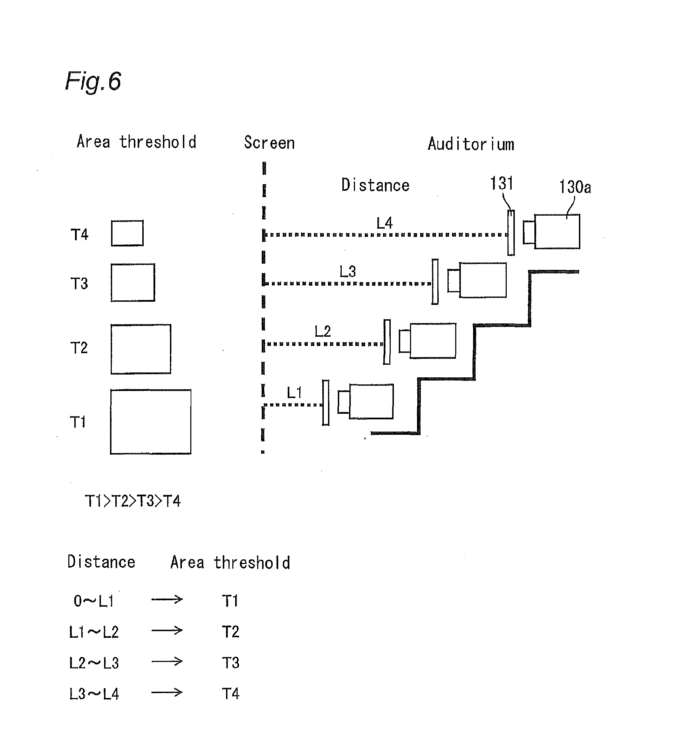

Further, in the determination carried out by the camera determination portion 156 in the image processing part 143, the threshold value for the area may be changed depending on the distance from the screen 203. This is explained below, with reference to FIG. 6.

Here, the following description explains an exemplary case where a plurality of infrared ray cameras take charge of image pickup regions located at different distances L from the screen 203 to the auditorium, respectively. With reference to the example shown in FIG. 6, the following method is explained: the screen 203 is divided into four image pickup regions from a lower portion toward above, and four infrared ray cameras are used for detecting the camera 130a used in illegal camcording. The four image pickup regions are denoted by "R1", "R2", "R3", and "R4" from the bottom, respectively.

As shown in FIG. 6, in the image pickup region R1, the distance from the screen 203 to the auditorium is L1; in the image pickup region R2, the distance from the screen 203 to the auditorium is L2; in the image pickup region R3, the distance from the screen 203 to the auditorium is L3; and in the image pickup region R4, the distance from the screen 203 to the auditorium is L4. The distances L1, L2, L3, and L4 satisfy L4>L3>L2>L1.

The infrared ray cameras 205 are placed on substantially the same plane as that of the screen 203. Therefore, when an image of the auditorium is picked up by the infrared ray cameras 205, an image of the infrared ray cut filter 131 attached to the camera 130a has a smaller area as the distance L increases. Therefore, the camera determination portion 156 varies the threshold value T for the area used in the determination of the presence of a camera used in illegal camcording according to the distance L, from T1 to T4, as shown in FIG. 6. This allows the camera determination portion 156 to accurately determine whether or not reflection light of infrared rays in a size equivalent to an infrared ray cut filter is detected, as to each of the regions as image pickup targets of the infrared ray cameras 205.

Regarding the camera determination at Step 108 shown in FIG. 21 by the camera determination portion 156, the following variation can be considered. An image frame obtained after a portion corresponding to infrared ray diffuse reflection, and a portion corresponding to a reflection article that is moving are removed by the difference calculation at Step S103, the motion detection at Step S104, and the noise removal at Step S105 is an image that contains an infrared ray specular region that remains static, in the case where a camera used in illegal camcording, having the infrared ray cut filter 131, is present.

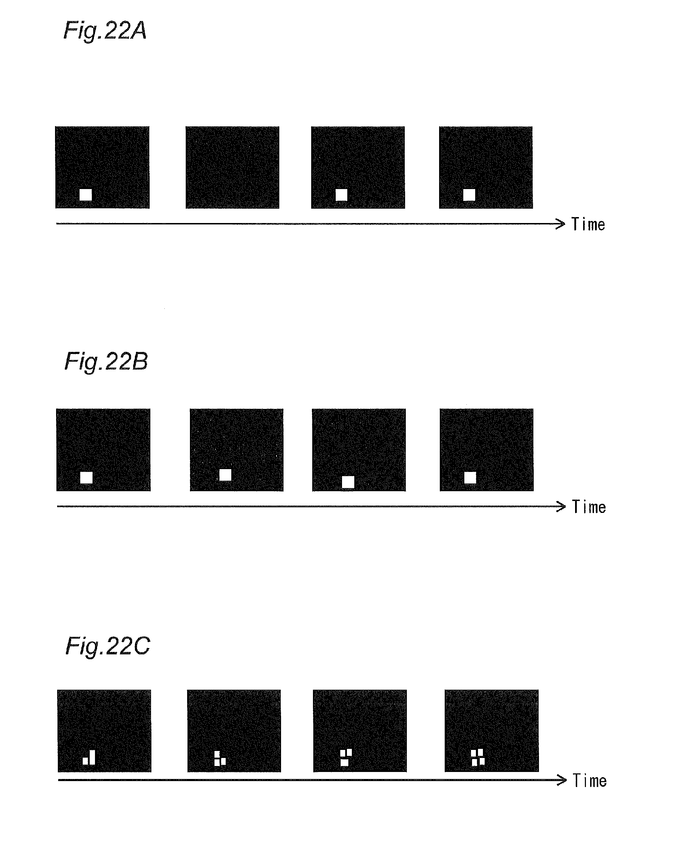

It should be noted that the processing of Steps S101 to S108 is usually executed per a certain number of image frames. Therefore, for example, as shown in FIG. 22A, a specular object cannot be detected in a part of a plurality of temporally successive image frames after the area measurement at Step S107 in some cases for a certain reason. In the example shown in FIG. 22A, in the second image frame among four successive image frames, a region of white display corresponding to a specular object is not detected. Such a state occurs in the following manner or the like: when the image frame concerned is picked up, the direction of a camera used in illegal camcording deviates subtly or the like, and specular reflection light from the camera is not detected by the infrared ray camera.

Further, for example, the position of a specular object deviates subtly over the plurality of image frames in some cases, as shown in FIG. 22B, due to a motion of a body of an illegally camcording person or the like. Still further, for example, a specular object is detected in a state of being divided into different small regions over a plurality of successive image frames in some cases, as shown in FIG. 22C.

Then, in order to appropriately cope with these cases, the camera determination portion 156 preferably performs the following processing operation to a plurality of temporally successive image frames after the area measurement at Step S107.

First, in order to cope with the case shown in FIG. 22A, the camera determination portion 156 counts the number C1 of image frames in which the presence of a camera used in illegal camcording (a region of white display having an area equal to or larger than a predetermined area) is determined, among a plurality of successive image frames, and the number C2 of image frames in which the absence of a specular object is determined. Then, if the number C1 is greater the number C2, the camera determination portion 156 determines that a camera used in illegal camcording is present. It should be noted that a requirement that the number C1 is sufficiently greater than the number C2 (greater for a predetermined number of frames or more) may be used here as the requirement for the determination of the presence of a camera used in illegal camcording.

In order to cope with the case shown in FIG. 22B, the camera determination portion 156 determines a center of gravity of a region of white display equal to or larger than a predetermined area that represents a camera used in illegal camcording, regarding each of a plurality of successive image frames. Then, if the moving distance of the center of gravity of the region is at or less than a certain set value over the plurality of image frames, it is determined that a camera used in illegal camcording is present at the position of the region concerned.

Further, in order to cope with the case shown in FIG. 22C, the camera determination portion 156 determines a center of gravity of the small regions in each of the plurality of successive image frames. If distances between the centers of gravity of the small regions are at or less than a certain set value over the plurality of image frames, it is determined that a camera used in illegal camcording is present at the position of an aggregation of the small regions. Alternatively, the camera determination portion 156 may apply an expansion processing to each of the small regions so as to join the small regions, and determine whether or not there is a region of white display having an area equal to or larger than a predetermined area, representing the presence of a camera used in illegal camcording.

It should be noted that the infrared ray camera 205 used in the present embodiment may have an adjustable focal position. In this case, the infrared ray camera 205 sets a wide light receiving range to search the whole auditorium, and in the case where reflection light that is assumed to be an illegally camcording camera is detected, the camera 205 thereafter draws focus to the position and magnifies the region, whereby the presence/absence of an illegally camcording camera can be detected more surely. In the or such an infrared ray camera capable of adjusting a focal position, the threshold of the area in the determination by the camera determination portion 156 is preferably varied according to the focal distance, for example, as shown in FIG. 6.

Further, an auxiliary infrared ray camera (auxiliary camera) may be provided at a position different from the plane at which the screen is provided, for example, on a side wall face of a theater. This auxiliary camera is provided on an assumption that infrared rays reflected by the infrared ray cut filter 131 are further reflected by the screen 203 and the like. This auxiliary camera may be able to detect direct reflection from a filters. The provision of such an auxiliary camera makes it possible to detect the presence/absence of a camera used in illegal camcording more surely As a place where the auxiliary camera is provided, a place where the camera can capture reflection light from the screen 203 is preferred.

### Method of estimating position of illegally camcording camera

Further, in the video image display system of the present embodiment, it is possible that in the case where the camera determination portion 156 determines that there is an illegally camcording camera, the position of the illegally camcording camera in the theater is estimated at the same time when the determination result comes out, and the estimated position is output together with the determination result. This method of estimating a position of an illegally camcording camera is described below.

Specifically, examples of the foregoing method include (1) a method in which a position of an illegally camcording camera in a theater is estimated based on a position of white display region in an image picked up, or based on brightness distribution in the region before binarization; and (2) a method in which an internal structure of a theater is stored preliminarily; a relative position of detected reflection light in infrared ray data is detected based on the stored theater internal structure information (facility position (information), and a position of an illegally camcording camera is estimated.

First, an example of the method (1) is a method of estimating a position of an illegally camcording camera by using the technique described in Reference Document 1: Hara, Tan, Nishino, Nakazawa, Ikeuchi et al., "Estimation of light source position, color, and surface reflection characteristics from single image", Journal of Information Processing Society of Japan, Vol. 44, No. SIG9 (CVIM7), pp. 94-104 (July 2003).

This technique is on the premise that light reflected by an object is composed of two reflection components of specular reflection and diffuse reflection. Here, the specular reflection is complete light reflection by a mirror or the like, providing a reflection component whose incidence angle and reflection angle are at the same degrees with respect to the reflecting surface. On the other hand, diffuse reflection is reflection of light from a surface that is not flat, providing a reflection component whose incidence angle and reflection angle are at different degrees with respect to the reflecting surface. This diffuse reflection is also referred to as irregular reflection

Since these two reflection components are significantly different in characteristics thereof, the specular reflection component and the diffuse reflection component are separated first in the present technique. Then, parameters accompanying each component are renewed so that an evaluation function becomes minimum, so that a light source position (specifically, a relative position of the light source with respect to the reflection surface, which is equivalent to a position of an illegally camcording camera in the present invention) is estimated.

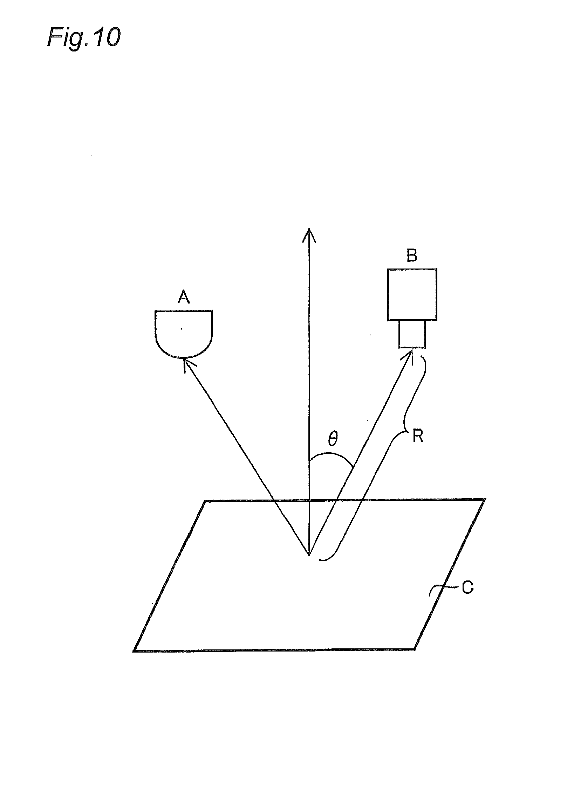

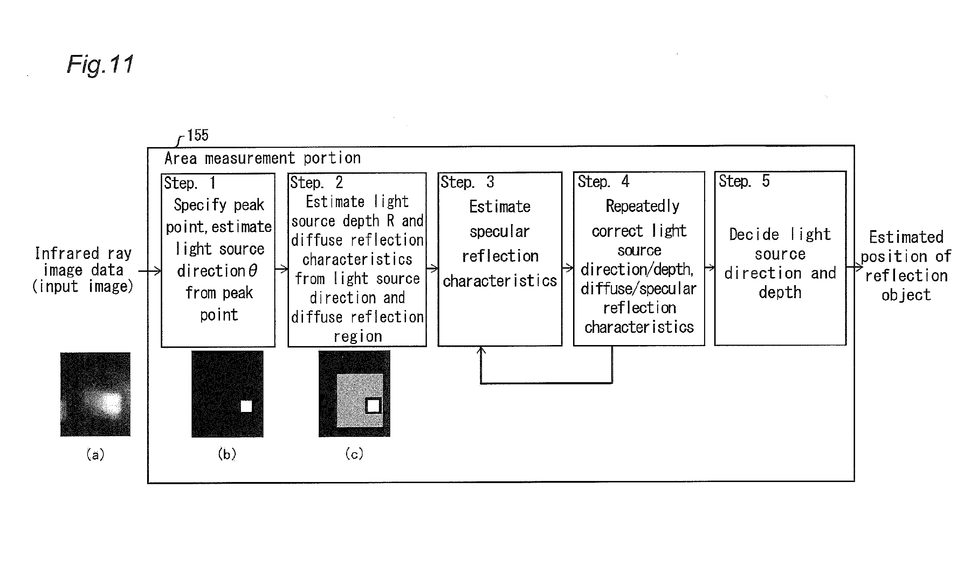

A specific method for estimating a light source position is explained below, with reference to FIGS. 10 and 11. It should be noted that this method is based on a technique described in "2.2 Outline of Proposed Technique" in the aforementioned Reference Document 1. FIG. 10 schematically shows a positional relationship among a light source A, a camera B, and a reflection object C in the present technique. In the case where this drawing is applied to the video image display system of the present invention, the light source A corresponds to the infrared ray emitting unit 204, the camera B corresponds to the infrared ray camera 205, the reflection object C corresponds to the infrared ray cut filter 131 attached to the video camera 130.

Further, FIG. 11 is a block diagram showing a flow of respective processing operations performed in the present method. The processing operations shown in this block diagram can be executed, for example, in the area measurement portion 155 in the image processing part 143 shown in FIG. 4. In other words, the area measurement portion 155 has a function of a position estimation portion for estimating a position of the video camera 130 in a theater. It should be noted that image data used for the position estimation carried out in this method are frame image data (infrared ray image data) transmitted from the infrared ray receiving part 142. In other words, the data are image data that have not been subjected to image processing at the blocks 151 to 154 in the image processing part 143. An example of such image data is shown in (a) of FIG. 11.

As shown in FIG. 11, the area measurement portion 155 first identifies a pixel (peak point) at which specular reflection light has a maximum intensity; based on input infrared ray image data, and estimates a light source direction θ (see FIG. 10) from the peak point (see Step. 1). In image data shown in (b) of FIG. 11, the peak point is represented by a white mark.

Next, at Step. 2, a distance from the specular reflection peak to the light source (this is referred to as a light source depth "R" (see FIG. 10) and diffuse reflection characteristics are estimated, with reference to the degree of fitting of the diffuse reflection model to the brightness distribution in the diffuse reflection region (gray portion in image data in (c) of FIG. 11).

Since the positions of the light source A and the camera B are known, the position of the reflection object C can be estimated by defining R and θ as described above and determining the R and the θ. It should be noted that as shown in FIG. 10, the R and the θ represent relative positions of the camera and the reflection object C, but here, for conveniences sake, they are expressed as the "light source direction θ" and the "light source depth R".

At the next Step. 3, the specular reflection component is separated based on diffuse reflection characteristics estimated at Step. 2, and specular reflection characteristics are estimated. Next, at Step. 4, a virtual reflection image is created based on the light source direction θ, the depth R, the diffuse reflection characteristics, and the specular reflection characteristics, which have been estimated in the respective previous steps. A difference between the virtual reflection image thus obtained and a real image (energy function) is calculated, and the Steps. 1 to 4 are repeated while separation degrees of diffuse and reflection regions are being adjusted until the energy function converges. At Step. 5, the light source direction θ and the light source depth R when the function converges are decided to be the estimated position of the reflection object C.

By the above-described method, the estimated position of the reflection object C is determined as a position of a camera used in illegal camcording.

Incidentally, the reflection on a surface of an optical filter such as an infrared ray cut filter attached to a camera used in illegal camcording contains 100 % of a specular reflection component, and does not contain any diffuse reflection component. However, the method (1) described above is on the premise that the reflection object C has both of the specular reflection characteristics and the diffuse reflection characteristics, and estimates the light source depth R based on the diffuse reflection characteristics. Therefore, in the case where the reflection object is a specular reflection object such as an optical filter, an accurate value of the light source death R cannot be determined.

Then, as a method capable of estimating a position of a reflection object even in the case where it is a specular reflection object such as an optical filter, the aforementioned method (2) can be applied. A specific example of the method (2) is explained below.

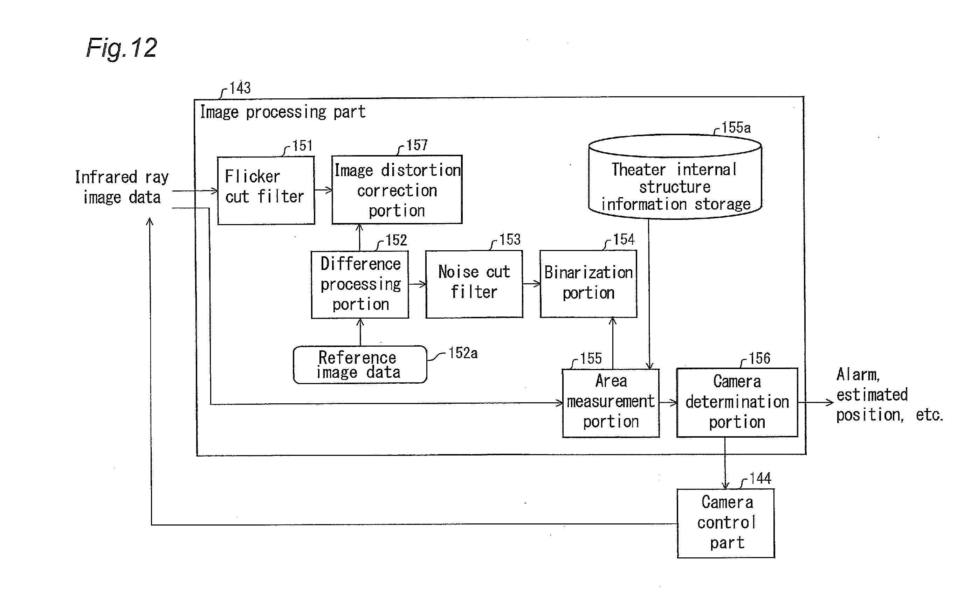

FIG. 12 shows a functional configuration of the image processing part 143 in the case where this method is applied. In this drawing, blocks having the same functions as those in the configuration of the image processing part 143 shown in FIG. 4 are denoted by the same reference numerals.

In the image processing part 143 shown in FIG. 12, an image distortion correction portion 157 is provided in addition to the configuration of the image processing part 143 shown in FIG. 4, the image distortion correction portion 157 being positioned between the flicker cut filter 151 and the difference processing portion 152. The area measurement portion 155 includes a theater internal structure information storage 155a for storing theater internal structure information used as reference data when estimation of a position of an illegally camcording camera is carried out. Further, outside the image processing part 143, a camera control part 144 is provided. It should be noted that the order of the noise cut filter 153 and the binarization portion 154 may be provided in a reversed order. In other words, as to the noise removal and the binarization, either of them may be carried out first.

The image distortion correction portion 157 performs a processing operation that is referred to as distortion correction.

The theater internal structure information storage 155a stores theater internal structure information (information about a facility such as a movie theater where the video image display system 1 is provided) that is required for carrying out various position estimation methods that will be described later. This theater internal structure information is information based on image data that are obtained by picking up images of the inside of a theater preliminarily before a movie is screened.

The camera control part 144 performs control of the infrared ray camera 205 such as an operation of changing the image pickup position, magnifying/reducing operations, etc., based on a determination result of the camera determination portion 156.

The following description explains specific examples 1 to 3 of the method of estimating a position of a camera used in illegal camcording, performed in the image processing part 143 shown in FIG. 12.

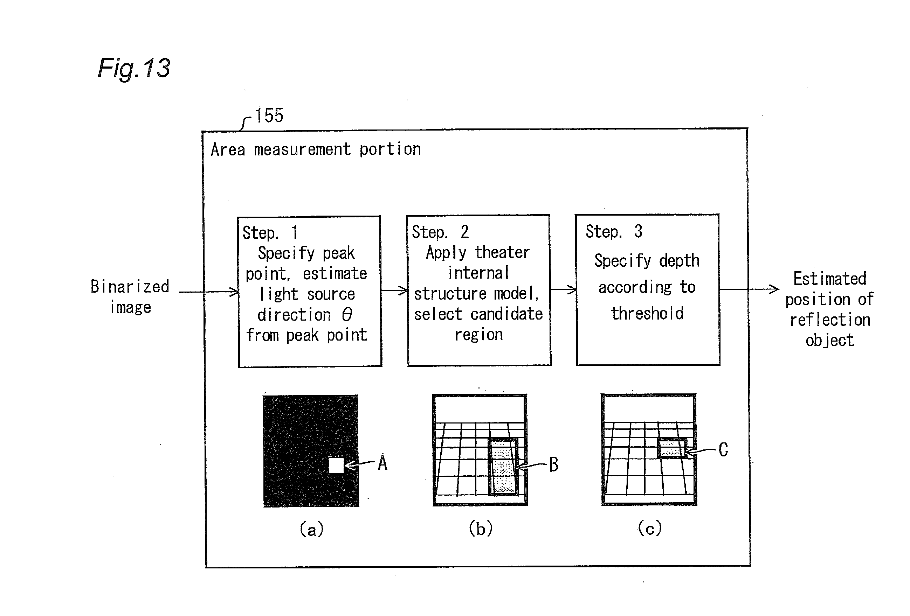

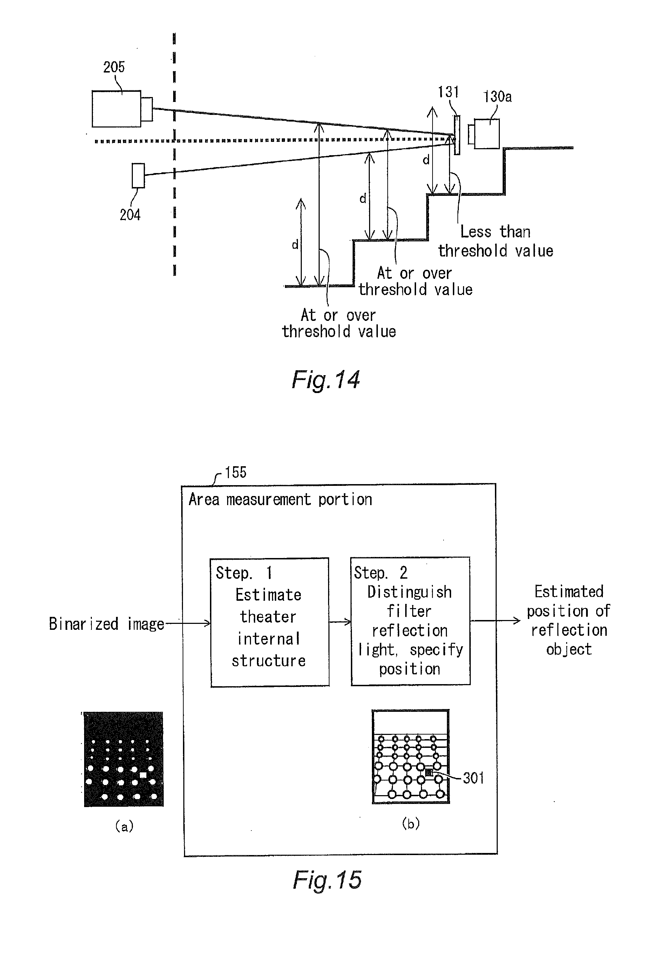

First, the specific example 1 (first method) is explained with reference to FIGS. 13 and 14.

In this method, as shown in FIG. 13, the position estimation is carried out in the area measurement portion 155 based on the image data binarized by the binarization portion 154 (e.g., image data in (a) of FIG. 13). In other words, the area measurement portion 155 also has a function as a position estimation portion for estimating a position of the video camera 130 in the theater.

First, at Step. 1, a pixel (peak point) at which specular reflection light has a maximum intensity is identified based on binarized image data input thereto, and a light source direction θ (see FIG. 10) is estimated from the peak point. In image data shown in (a) of FIG. 13, the peak point is set as "A".

Next, at Step. 2, the obtained light source direction θ is applied to the theater internal structure model stored in the theater internal structure information storage 155a, and a candidate region where a camera used in illegal camcording could possibly be present is selected. In (b) of FIG. 13, the candidate region selected by the application to the theater internal structure model is indicated as "B".

Finally, at Step. 3, the light source depth R is determined depending whether or not a height from the floor to the optical or the infrared ray camera 205 is less than a threshold value d.

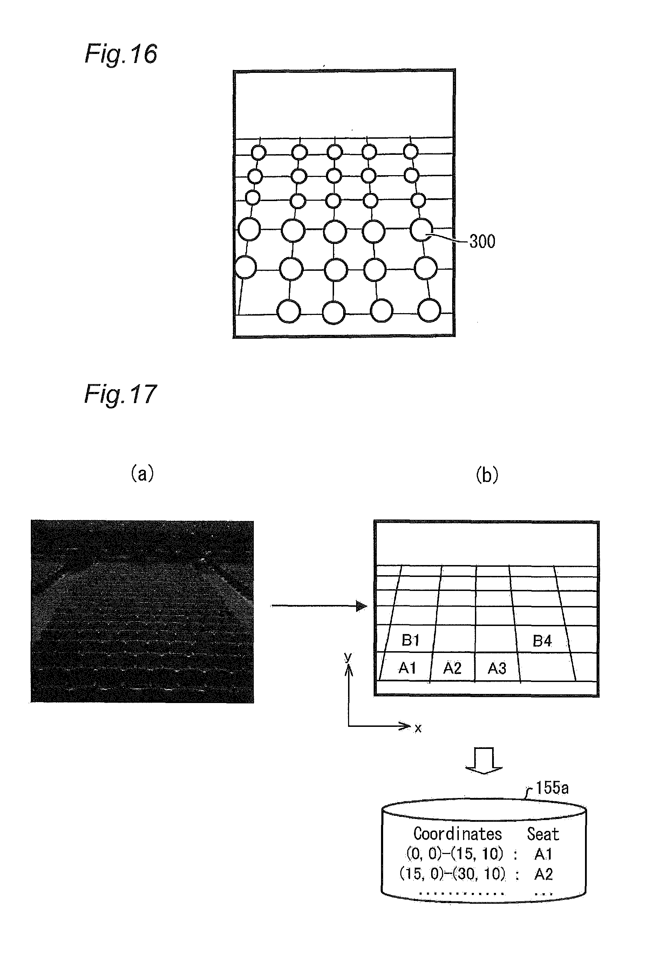

Next, the specific example 2 (second method) is explained with reference to FIGS. 15 and 16.

In this method, one or a plurality of reflective markers such as motion capture reflective markers (produced by Keisoku Planet) are placed preliminarily at predetermined positions in the theater. Then, image data obtained when the video image display system 1 operates in a state without any audience is obtained, and the relative positions of the reflective markers in the theater are stored as theater internal structure information in the theater internal structure information storage 155a.

FIG. 16 shows exemplary theater internal structure information obtained in the case where reflective markers 300 are arranged at seats in the auditorium, respectively. At positions where the reflective markers are present (positions indicated by o in FIG. 16), reflection light has higher intensities, as compared with those at other positions. Then, by using the least-squares method or the like, straight lines are extended so that they pass as many high reflection light intensity portions (portions indicated by o in FIG. 16) as possible, whereby the theater internal structure information as shown in FIG. 16 is obtained. Then, using this theater internal structure information, the position of the infrared ray cut filter 131 attached to a camera used in illegal camcording is identified.

More specifically, as shown in FIG. 15, theater internal structure information as shown in FIG. 16 is created by the area measurement portion 155 based on the binarized image data obtained from the image data that the infrared ray camera obtained in a state without any audience at Step. 1, and the theater internal structure information is stored in the theater internal structure storage 155a.

Next, at Step. 2, based on binarized image data (see (b) of FIG. 15) obtained from image data that the infrared ray camera obtained in a state with an audience, a peak 301 of reflection light that is not contained in the theater internal structure information shown in FIG. 16 is identified as the infrared ray cut filter 131 attached to an illegally camcording camera. Further, image data shown in (b) of FIG. 15 are applied to the theater internal structure information shown in FIG. 16, so that from which seat the peak 301 of reflection light thus detected was obtained is determined.

Through the above-described processing operations, the position of a specular object such as an optical filter can be estimated. It should be noted that as the greater number of reflective markers 300 are provided in the theater, higher accuracy is obtained in the position estimation, but the number of the reflective markers is not limited. The reflective markers 300 may be provided only at four corners of the theater.

It should be noted that infrared ray emitting light sources such as infrared LEDs may be provided at predetermined positions in a theater, in place of the above-described reflective markers 300. The light sources at different positions may be blinked at different blinking frequencies, respectively whereby the position of the infrared ray cut filter 131 can be specified in correspondence with the respective light emission patterns of the light sources. It should be noted that the blinking frequencies of light sources can be adjusted by a power source and a pulse generation circuit. The blinking frequency of the light source is preferably set to about 10 Hz, so as to achieve the most remarkable interference effect.

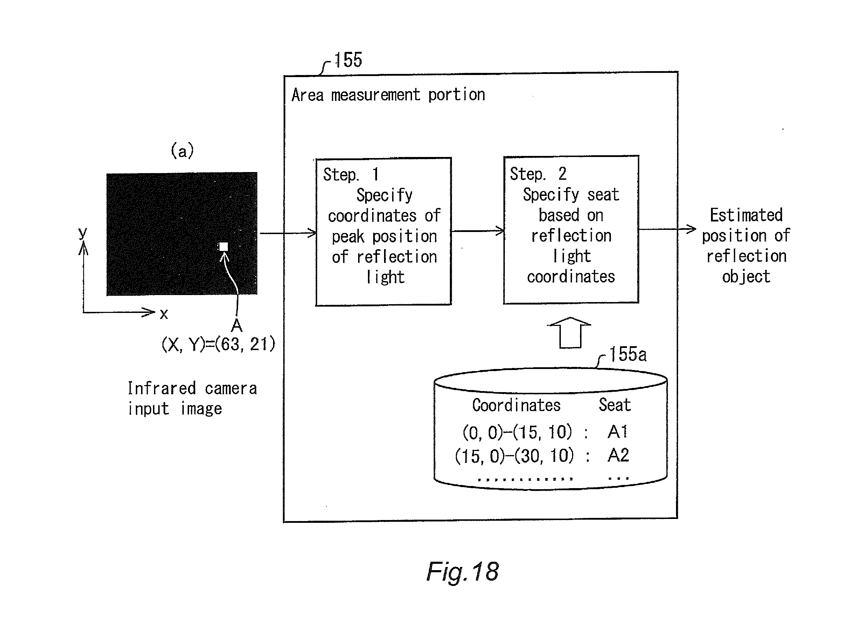

Next, the specific example 3 (third method) is explained, with reference to FIGS. 17 and 18.

Normally; a theater has such a structure that the entire screen can be viewed at any arbitrary seat of the auditorium, and is designed so that a sight line at a certain seat and a sight line at another seat do not overlap. Then, in the present method, with such a structure of a theater being taken into consideration, a position of an illegally camcording camera is specified according to coordinates of image data obtained by the Infrared ray camera 205.

In this method, first, as shown in FIG. 17, data (see (a) of FIG. 17) that a camera (not limited to an infrared ray camera) obtained in a state without any audience are divided into regions by image processing (see (b) of FIG. 17). Then, each pixel is identified with XY coordinates, and a correspondence table showing which seat (A1, A2, ...) corresponds to a pixel of which coordinates is created, as shown in (b) of FIG. 17, and is stored in the theater internal structure information storage 155a.

The following is an exemplary method of creating the correspondence table: luminosity distribution and hue distribution are determined from image data (see (a) of FIG. 17) obtained by a camera (not limited to an infrared ray camera) in a state without any audience, luminosity/hue ranges are decided based on the distributions, and the region is divided into an auditorium region and the other region. Then, as to the auditorium region, luminosity distribution and hue distribution are determined, luminosity/hue ranges are anew decided based on the distributions, then, the auditorium region is divided into individual seats of the auditorium, and an image of divided regions (see (b) of FIG. 17) is created. Further, by labeling the individual divided regions, a correspondence table is created that makes it possible to determine on which seat arbitrary coordinates in an image are present, or if the coordinates are present in a region outside the auditorium.

Then, as shown in FIG. 18, a position of a camera used in illegal camcording is estimated by the area measurement portion 155, based on image data (see (a) of FIG. 18) that an infrared ray camera obtained in a state with an audience. It should be noted that the image data used in the position estimation performed by this method may be image data (infrared ray image data) directly transmitted from the infrared ray receiving part 142, or may be image data binarized by the image processing part 143.

More specifically at Step. 1 in FIG. 18, coordinates of a peak A of reflection light detected in input image data are specified. Next, at Step. 2, to which seat the peak A corresponds is determined, with use of the correspondence table between coordinates and seats stored in the theater internal structure information storage 155a.

For example, in the case where coordinates corresponding to the peak A are (X, Y) = (63, 21), it can be estimated that a camera used in illegal camcording is positioned at a seat number B4. It should be noted that a region including a plurality of seats may be output as an estimated position, in the case where a peak region of reflection light detected is large, or in the case where a reflection light peak is detected from a midpoint between seats.

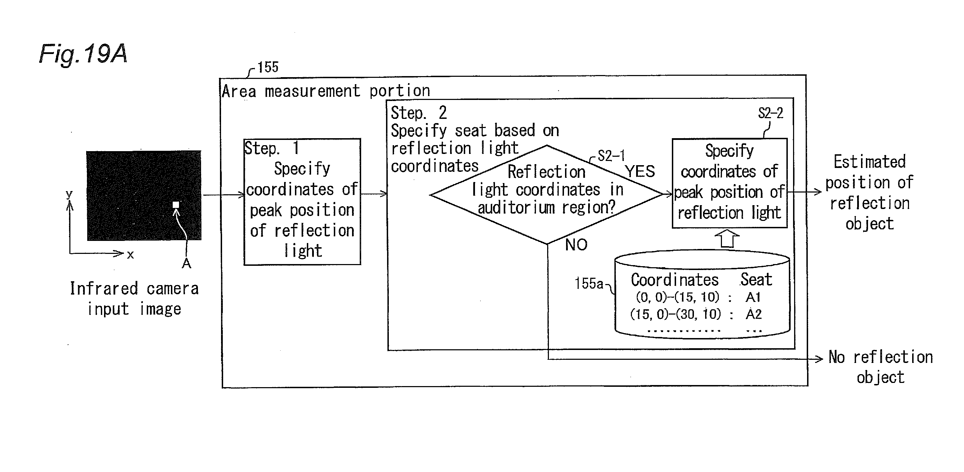

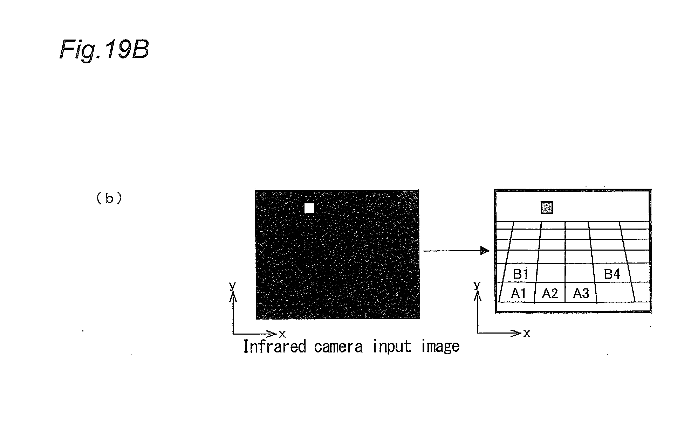

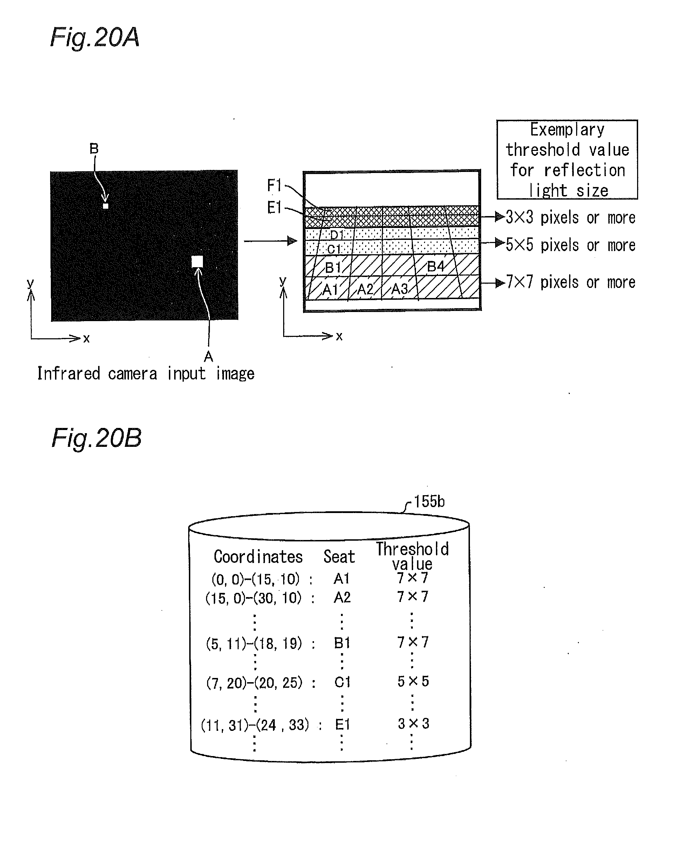

Further, as a modification of the example 3, the following method is also feasible. FIGS. 19A and 19B show schematic views that explain a first exemplary modification of the example 3. FIGS. 20A and 20B show schematic views that explain a second exemplary modification of the example 3.

In the first exemplary modification, as shown in FIG. 19A, upon the seat estimation step using the correspondence table at Step. 2, it is first determined whether or not the detected reflection light is present in the region of the auditorium (S2-1), and in the case where it is determined that the reflection light is present in the region other than the auditorium (in the case of "NO" at S2-1), it is determined that there is no reflection object corresponding to a camera used in illegal camcording. FIG. 19B shows an image input from an infrared ray camera and image data in which seats and coordinates of pixels correspond to each other in this case.

On the other hand, in the case where coordinates of reflection light are determined to be present in the region of the auditorium, (in the case of "YES" at S2-1), to which seat the peak A of the reflection light corresponds is determined with use of the coordinate-seat correspondence table stored in the theater internal structure information storage 155a, like at Step. 2 of FIG. 18 (S2-2).

In the second exemplary modification, utilizing the phenomenon that the size of reflection light corresponding to an illegally camcording camera varies depending on the distance between the screen and the seat, the size of reflection light with which it is determined that "an illegally camcording camera is present" is varied depending on the position of the seat.

More specifically, even with respect to infrared, ray cut filters of the same size, the size of reflection light detected is larger at a position closer to the screen as shown in the left part of FIG. 20A (e.g., reflection light denoted by "A"), and the size of reflection light detected is smaller at a position farther from the screen (e.g., reflection light denoted by "B"). On the basis of this, as shown in the right part of FIG. 20A, for example, the threshold value of the size of reflection light is set to 7x7 pixels or more at front rows (rows A and B), the threshold value of the size of reflection light is set to 5x5 pixels or more at the middle rows (rows C and D), and the threshold value of the size of reflection light is set to 3x3 pixels or more at the back rows (rows E and F).

In this case, to which seat the peak of the reflection light corresponds is determined with use of the coordinate-seat correspondence table shown in FIG. 20B, stored in the theater internal structure information storage 155b, at Step. 2 of FIG. 18. Further, on the basis of the threshold values stored in the theater internal structure information storage 155b, it is determined that "an illegally camcording camera is present" in the case where reflection light having a size satisfying the requirement of the respective threshold values corresponding to the positions is detected.

### Embodiment 2

A configuration that includes one infrared ray camera 205 having a wide-angle lens capable of capturing a whole auditorium of a theater, which is attached to the front face the camera, is described as the embodiment described above, but the present invention is not limited to this configuration. In other words, as long as the infrared ray camera (infrared ray detection section) is capable of capturing a whole auditorium of a theater, the configuration of the present invention is not limited particularly.

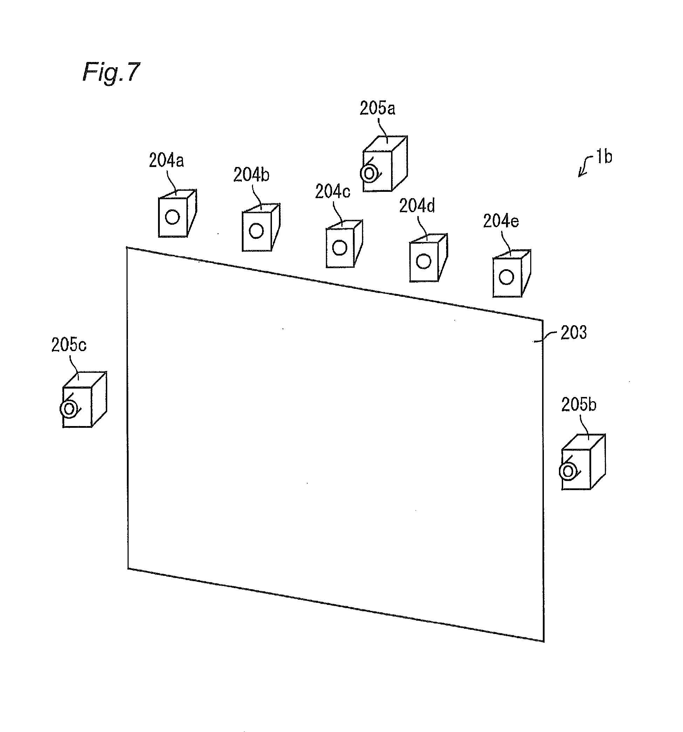

FIG. 7 shows another exemplary configuration of the video image display system of the present invention. A video image display screen of the video image display system 1b shown in FIG. 7 is composed of a screen 203 (video image display section), five infrared ray emitting units 204a to 204e (non-visible light emission parts), and three infrared ray cameras 205a to 205c (non-visible light detection section, infrared ray detection section).

The video image display screen of the video image display system 1b is different from the video image display screen of the video image display system 1 shown in FIG. 1, regarding the configuration and arrangement position of the infrared ray emitting units, and the number of infrared ray cameras.

More specifically, in the video image display system 1b, five infrared ray emitting units 204a to 204e are arranged along an upper end of the screen. In the video image display system 1b, one infrared light emission region is provided in each infrared ray emitting unit, whereas the video image display screen of the video image display system 1 shown in FIG. 1 has a configuration in which a plurality of light emission regions 214 are provided in one infrared ray emitting unit 204. Thus, five infrared ray emitting units are provided, and the auditorium is divided into regions to which the units project light, respectively, whereby infrared rays can be projected to everywhere from corner to corner in a theater at a predetermined intensity or greater than that. Therefore, wherever an illegally camcording person camcords a video image on the screen, a camcorded image content unavoidably contains an interference image, if a video camera without an infrared ray cut filter is used. It should be noted that the five infrared ray emitting units 204a to 204e may emit infrared rays at different light emission intensities. Besides, the infrared ray emitting units 204a to 204e may repeat turning on/off at the same or different cycles, respectively.

Further, in the video image display system 1b, the infrared ray camera 205a is provided above the screen 203, the infrared ray camera 205b is provided on the observer's right side of the screen 203, and the infrared ray camera 205c is provided on the observer's left side of the screen 203. The three infrared ray cameras, which are thus provided to take charge of respective regions in the theater, can monitor the regions, respectively. Therefore, unlike the case of the video image display system 1 shown in FIG. 1 in which the wide-angle lens 141 is provided to the infrared ray camera, the video image display system 1b is capable of detecting an illegal camcording action by a video camera with use of an infrared ray cut filter, at any seat in the auditorium in the theater.

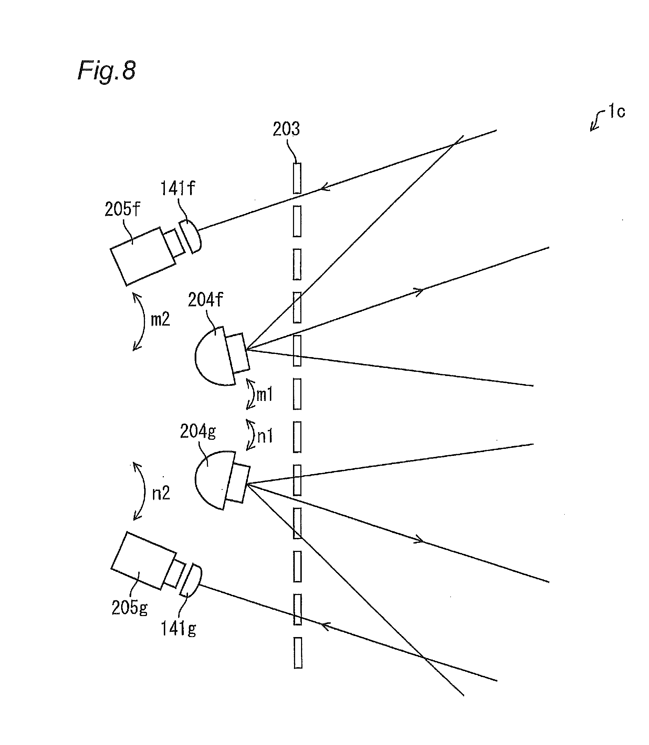

FIG. 8 shows still another exemplary configuration of a video image display system of the present invention. A video image display screen of a video image display system 1c shown in FIG. 8 is composed of a screen 203 (video image display section), two infrared ray emitting units 204f and 204g (non-visible light emission parts), and two infrared ray cameras 205f any 205g (non-visible light detection section, infrared ray detection section).

The video image display screen of the video image display system 1 shown in FIG. 1 has a configuration in which a plurality of light emission regions 214 are provided in one infrared ray emitting unit 204, but on the other hang in the video image display system 1c, one infrared light emission region is provided in each infrared ray emitting unit. The infrared ray emitting units 204f and 204g have motion regions having motion ranges m1 and n1, respectively. In the video image display system 1c, two infrared ray cameras 205f and 205g are provided, so as to monitor different regions in the theater, respectively. The infrared ray cameras 205f and 205g have motion regions having motion ranges m2 and n2, respectively.

Here, preferably the infrared ray emitting unit 204f and the infrared ray camera 205f operate in an interlocked manner, and the infrared ray emitting unit 204g and the infrared ray camera 205g operate in an interlocked manner. Here, that "the infrared ray emitting unit 204 and the infrared ray camera 205 operate in an interlocked manner" means that they change the irradiation region and the light receiving region in synchronization with each other, so that a light receiving surface of the infrared ray camera is directed in such a direction that reflection light of infrared rays emitted from the infrared ray emitting unit can be received efficiently. More specifically, the infrared ray emitting unit and the infrared ray camera move in the motion ranges m1 and m2 (or n1 and n2), respectively, while maintaining the positional relationship therebetween in such a manner that the optical axis direction of infrared rays emitted from the infrared ray emitting unit is perpendicular to the light receiving surface of the infrared ray camera.

In the example shown in FIG. 8, the wide-angle lenses 141f and 141g are provided to the infrared ray cameras 205g and 205g, respectively, but the wide-angle lenses are not necessarily provided depending on the size of the theater where the present system is used. This is because in the present system, the region to be captured is divided and the two infrared ray cameras 205f and 205g capture images of these regions, respectively and the infrared ray cameras 205f and 205g are capable of changing the regions to capture, in an interlocked manner with the motions of the infrared ray emitting units 204f and 204g. This configuration makes it possible to detect reflection light from all the seats of the auditorium in the theater, even if the region for which one infrared ray camera is capable of capturing images is smaller as compared with the video image display system 1 shown in FIG. 1.

### Embodiment 3

The following description explains still another embodiment of the present invention. Unlike Embodiments 1 and 2, in Embodiment 3, an infrared ray emitting unit that emits infrared rays as noises to interfere with original video images, and an infrared ray emitting unit that emits infrared rays for detecting an illegally camcording camera, have different configurations.

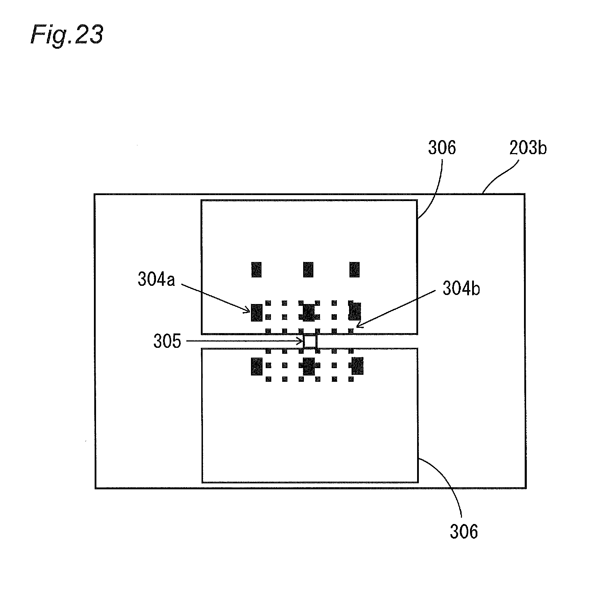

FIG. 23 is a back view showing a schematic configuration of a screen 203b in a video image display system according to Embodiment 3. As shown in FIG. 23, the screen 203b according to the present embodiment has, on its back side, a plurality of infrared light sources 304a for noise generation that generate infrared rays as noises that interfere with original video images, and a plurality of infrared light sources 304b for camera detection that generate infrared rays for detection of an illegally camcording camera.

The infrared light sources 304a for noise generation are, for example, infrared LEDs having an output of 1.4 W. The infrared light sources 304b for camera detection are, for example, bullet-shaped infrared LEDs having an output of 0.14 W. In the example shown in FIG. 23, an infrared camera 305 is provided substantially at the center on a back face of the screen 203b. The infrared light sources 304a for noise generation and the infrared light sources 304b for camera detection emit infrared rays of wavelengths of, for example, 870 to 940 nm. A visible-light-range cut filter (a short wavelength cut filter having a cutoff wavelength of 870 nm) is preferably attached to the infrared camera 305.

In the example shown in FIG. 23, the infrared light sources 304 for camera detection are arranged at equal intervals in a square lattice form of 6 in the vertical direction and 6 in the horizontal direction, which means that they are 36 in total, with the infrared camera 305 substantially at the center. It should be noted that in the example of FIG. 23, two substrates 306 are provided on a back face of the screen 203b so that the infrared light sources 304b for camera detection are attached thereto. The two substrates 306 are provided with the infrared camera 305 interposed therebetween, above and below the infrared camera 305, and a plurality of pores which allow the infrared light sources 304b for camera detection to go therethrough. In other words, the infrared light sources 304b for camera detection are supported in a square lattice form by the two substrates 306 on the back face of the screen 203b.

In the example shown in FIG. 23, the infrared light sources 304a for noise generation are provided in an array of 3 in the vertical direction and 3 in the horizontal direction, which means 9 in total. The infrared light sources 304a for noise generation are also supported by the substrates 306. It should be noted that the infrared light sources 304a for noise generation have greater outputs, as compared with the infrared light sources 304b for camera detection, and hence, the heat generated by the same is large in amount. Therefore, a cooling fan is preferably provided on a back side thereof.

The infrared rays emitted from the infrared light sources 304a for noise generation and the infrared light sources 304b for camera detection are emitted toward the observer's side through acoustic pores provided in the screen 203b.

Here, if it is assumed that an infrared ray cut filter of an illegally camcording camera to be detected has a square filter having a length d of one side of 50 mm, or a round filter having a diameter d of 50 mm, the interval 1s in the square lattice form may be set to, for example, 70 mm, according to the above-described formula (1).

It should be noted that the example shown in FIG. 23 is merely one example, and the number of the infrared light sources and the number of the infrared cameras may be set arbitrarily, according to the screen size or the like. Further, here, the example in which the infrared light sources 304b for camera detection are arranged in a square lattice form is described, but as explained in the description of Embodiment 1, they may be arranged in a triangular lattice form. Alternatively, as explained in the description of Embodiment 1, the infrared light sources 304b for camera detection may be provided in movable units such as scanner-type units or rotation-type units. Further, the infrared light sources 304a for noise generation can be provided in movable units, as long as the infrared light sources 304a for noise generation are not extremely large.

The infrared light sources 304a for noise generation and the infrared light sources 304b for camera detection can be independently controlled. At timings at which the infrared light sources 304a for noise generation do not emit light, the infrared light sources 304b for camera detection emit light preferable. The infrared camera 305 detects reflection light at timings according to the timings at which the infrared light sources 304b for camera detection emit light. The infrared ray detection section 140 receives reflection light from an illegally camcording camera, and performs image processing, as explained in the description of Embodiment 1.

### Embodiment 4

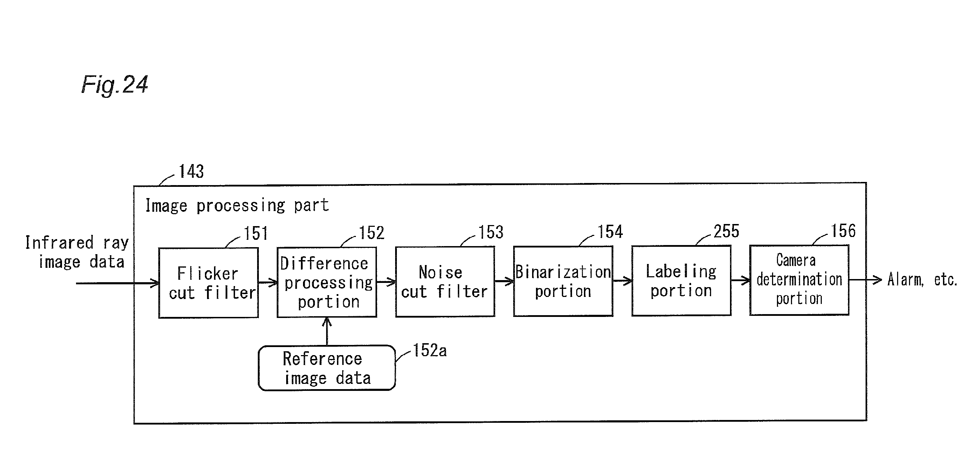

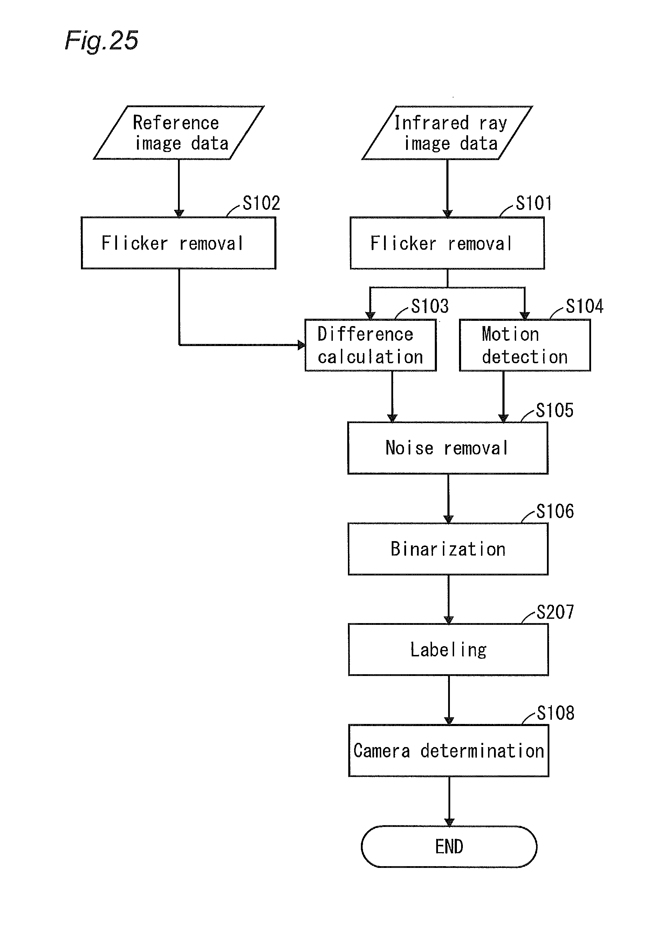

The following description explains still another embodiment of the present invention. In the video image display system according to Embodiment 4, as shown in FIG. 24, the image processing part 143 includes a labeling portion 255 in place of the area measurement portion 155. As shown in FIG. 25, the labeling (Step S207) is carried out in place of Step S107.

At subsequent Step S108, the camera determination portion 156 determines the presence/absence of a camera used in illegal camcording, by pattern matching.

The labeling referred to herein is a processing in which the same label number is applied to white display pixels that are continuous to each other in binarized image data. Through this processing, a minimum coordinate and a maximum coordinate of a region formed with continuous white display pixels are obtained. The minimum coordinate is the coordinate closest to the coordinate origin, in the region formed with the continuous white display pixels. The maximum coordinate is the coordinate farthest to the coordinate origin, in the above-described region. The area measurement portion 155 assumes a rectangle having a line extended between the minimum coordinate and the maximum coordinate as its diagonal, and extracts gray scale data of a region corresponding to the foregoing rectangle, from infrared ray image data transmitted from the infrared ray receiving part 142.

The pattern matching is a processing of comparing the result of the labeling performed at Step S207 with template images. As the template images, one or a plurality of images of rectangles representing reflection from an infrared ray cut filter of a camera used in illegal camcording are prepared preliminarily. The camera determination portion 156 performs pattern matching between the gray scale data of a rectangular region extracted in the labeling, and the data of the template images, so as to determine whether or not an image showing reflection from an infrared ray cut filter of a camera used in illegal camcording is present in the foregoing region.

It should be noted that examples of the calculation performed in the pattern matching of the template image with the gray scale data of the rectangular region extracted in the labeling include, for example, the method of determining a sum of absolute values of luminance differences, the method of determining a sum of squares of luminance differences, the method by the normalized cross-correlation function, etc., but the calculation is not limited to these. Further, the example in which the region of extraction of gray scale data (i.e., the region as a target of pattern matching that will be described later) and the template image are rectangular is explained herein, but the configuration is not limited to this. The regions may be regions in predetermined shapes, such as round, triangle, or the like.

It should be noted that it is also preferable that a mask image for removing a region that does not require determination from image data is formed based on reference image data, and a product of a binarized image and the mask image is calculated before the labeling at Step S207. The region that does not require determination refers to, for example, a region where a camera used in illegal camcording cannot be present, among regions captured by the infrared ray camera. In the mask image, the gray level value of the region that does not require determination may be set to, for example, zero.

The present invention is not limited to the above-described embodiment, and may be modified variously within the scope shown by claims. Embodiments obtained by appropriate combinations of technical means disclosed herein also fall in the technical scope of the present invention.

### Industrial Applicability

According to the present invention, in the case where a digital video image displayed on a screen is camcorded by a video camera, display quality of the camcorded image can be degraded. Therefore, with use of the present invention in a movie theater or the like, the illegal camcording of video image contents and unauthorized distribution of the same can be prevented.

Further, a person who attempts to illegally camcord a video image content can be detected easily. Therefore, with use of the present invention in a movie theater or the like, an action of illegally camcording a video image content can be prevented.

## Claims

1. A video image display screen comprising:
a video image display section that displays a video image;
a non-visible light emission part that projects light other than visible light, together with the video image, toward an observer; and
a non-visible light detection section that detects the light other than visible light reflected by a camcorder owned by the observer.

2. The video image display screen according to claim 1,
wherein the light other than visible light is infrared rays, and
the non-visible light detection section is an infrared ray detection section that detects infrared rays.

3. The video image display screen according to claim 2, wherein the infrared ray detection section is an infrared ray camera.

4. The video image display screen according to claim 2 or 3, wherein, the infrared ray detection section detects reflection light from a member that blocks infrared rays.

5. The video image display screen according to any one of claims 1 to 4,
wherein the non-visible light emission part projects light, while changing a region irradiated with the light, and
the non-visible light detection section receives reflection light from a position at which the non-visible light emission part emits light.

6. The video image display screen according to any one of claims 1 to 5, wherein the non-visible light detection section has such a light receiving range that it can receive reflection light from all observers.

7. The video image display screen according to any one of claims 1 to 6, wherein a plurality of the non-visible light detection sections are provided.

8. The video image display screen according to any one of claims 1 to 7, wherein the non-visible light emission part is repeatedly turned on/off during a period while a video image is being displayed on the video image display section.

9. The video image display screen according to claim 3, further comprising an image processing part that processes image data obtained by the infrared ray camera,
wherein the image processing part includes a binarization portion that performs binarization with respect to each pixel of the image data according to a threshold value of an infrared ray intensity.

10. The video image display screen according to claim 9, wherein the image processing part further includes a frame cut portion that removes a frame in which all pixels of the image data have an infrared ray intensity of 0.

11. The video image display screen according to claim 9 or 10, wherein the image processing part further includes:
an area measurement portion that measures an area of a region where pixels each of which has a value equal to or greater than the threshold value as a result of binarization by the binarization portion are present; and
a determination portion that determines whether or not the area of the region where the said pixels are present, measured by the area measurement portion, is equal to or greater than a predetermined area, and in the case where the said area is equal to or greater than the predetermined area, determines that the camcorder is present.

12. The video image display screen according to claim 11, wherein the determination portion performs the determination by using a plurality of temporally successive frames.

13. The video image display screen according to claim 12, wherein, the determination portion determines that the camcorder is present, in the case where, among the plurality of temporally successive frames, the number of frames in each of which a region where pixels each of which has a value equal to or greater than the threshold value as a result of binarization by the binarization portion are present is determined to have an area equal to or greater than a predetermined area by the area measurement portion is greater than the number of frames in each of which such a region is determined to have an area smaller than the predetermined area.

14. The video image display screen according to claim 12, wherein the determination portion determines that the camcorder is present, in the case where a moving distance of a region is a predetermined distance or less over a plurality of temporally successive frames, the region being a region where pixels each of which has a value equal to or greater than the threshold value as a result of binarization by the binarization portion are present and that is determined to have an area equal to or greater than the predetermined area by the area measurement portion.

15. The video image display screen according to claim 12, wherein the determination portion determines that the camcorder is present, in the case where a distance between small regions is a predetermined distance or less over a plurality of temporally successive frames, the small region being a small region where pixels each of which has a value equal to or greater than the threshold value as a result of binarization by the binarization portion are present.

16. The video image display screen according to any one of claims 9 to 15, wherein the image processing part further includes:
a difference processing portion that calculates an infrared ray intensity difference between image data obtained by the infrared ray camera, and reference image data preliminarily stored,
wherein the reference image data are image data obtained by the infrared ray camera in a state in which the observer is not present.

17. The video image display screen according to claim 9 or 10, where the image processing part further includes:
a labeling portion that extracts data of a region that incorporates a region where pixels each of which has a value equal to or greater than the threshold value as a result of binarization by the binarization portion are present; and
a determination portion that determines presence/absence of a camcorder by performing template matching with respect to the data extracted by the labeling portion.

18. The video image display screen according to claim 3, further comprising an image processing part that processes image data obtained by the infrared ray camera,
wherein the image processing part includes a position estimation portion that estimates a position of the camcorder.

19. The video image display screen according to any one of claims 9 to 17, wherein the image processing part includes a position estimation portion that estimates a position of the camcorder.

20. The video image display screen according to claim 18 or 19, wherein the position estimation portion estimates a relative position of the camcorder in a facility in which the video image display screen is provided, based on preliminarily prepared position information about inside of the facility.

21. A video image display system comprising:
the video image display screen according to any one of claims 1 to 20; and
an image formation section that generates a display image based on digital video image signals, and projects the display image onto the video image display screen.

22. A detection method for detecting a camcorder for camcording a video image displayed on a video image display screen, the method comprising the steps of
projecting light other than visible light, together with the video image displayed on the video image display screen, toward an observer; and
detecting presence/absence of a camcorder by detecting an intensity of the light other than visible light reflected by the camcorder owned by the observer.

23. The detection method according to claim 22, wherein, in the step of detecting presence/absence of a camcorder, it is determined that a camcorder is present, in the case where the intensity of the light other than visible light is equal to or greater than a threshold value.

24. A video image display system comprising:
a video image display section that displays a video image; and
a non-visible light emission part that projects light other than visible light, together with the video image, toward an observer,
wherein the non-visible light emission part projects light, while changing a region irradiated with the light.
